(19) Europäisches Patentamt
European Patent Office
Office européen des brevets

(11) **EP 2 820 377 B1**

(12) **EUROPEAN PATENT SPECIFICATION**

(45) Date of publication and mention
of the grant of the patent:
**01.04.2020 Bulletin 2020/14**

(21) Application number: **13711454.2**

(22) Date of filing: **27.02.2013**

(51) Int Cl.:
*G01B 21/04* (2006.01)     *G01B 5/008* (2006.01)
*G01B 5/20* (2006.01)     *G06K 9/22* (2006.01)

(86) International application number:
**PCT/GB2013/050485**

(87) International publication number:
**WO 2013/128183 (06.09.2013 Gazette 2013/36)**

(54) **DATA PROCESSOR FOR A METROLOGICAL APPARATUS FOR MEASURING A SURFACE CHARACTERISTIC OF A WORKPIECE AND CORRESPONDING MEASURING METHOD**

DATENPROZESSOR FÜR EINE METROLOGISCHE VORRICHTUNG ZUR MESSUNG EINER OBERFLÄCHENEIGENSCHAFT EINES WERKSTÜCKES UND ENTSPRECHENDES MESSVERFAHREN

PROCESSEUR DE DONNÉES POUR UN APPAREIL MÉTROLOGIQUE POUR LA MESURE D'UNE CARACTÉRISTIQUE DE SURFACE ET MÉTHODE DE MESURE CORRESPONDANTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.02.2012 GB 201203343**
 **27.02.2012 GB 201203365**
 **27.02.2012 GB 201203322**

(43) Date of publication of application:
**07.01.2015 Bulletin 2015/02**

(73) Proprietor: **TAYLOR HOBSON LIMITED**
**Leicester LE4 9JQ (GB)**

(72) Inventor: **MANSFIELD, Daniel Ian**
**Leicester, Leicestershire LE4 9JQ (GB)**

(74) Representative: **Leach, Sean Adam et al**
**Mathys & Squire LLP**
**The Shard**
**32 London Bridge Street**
**London SE1 9SG (GB)**

(56) References cited:
**EP-A1- 1 835 256     EP-A1- 1 862 761**

**Description**

This invention relates to a surface measurement apparatus and method for facilitating measurement of one or more surface characteristics, in particular surface form.

Surface form or profile measurements may be made by effecting relative movement between a pivotally mounted stylus arm and a workpiece along a traverse path (measurement path) and detecting, using a transducer, the deflection of the stylus arm as a tip of a stylus carried by the stylus arm follows variation in the form of the surface transverse to the traverse path. Accurate measurement requires care in the setting up of the apparatus which can be time consuming.

Measurement of surfaces having significant form, such as aspheric lenses as may be used in optical storage devices such as digital versatile discs (DVD) recorders and players, and moulds for such lenses, present particular challenges because the steepness of the local slope of the surface being measured may result in a higher than desired contact angle between stylus tip and the surface being measured increasing the likelihood of the stylus tip slipping or dragging on the surface which could render the measurement inaccurate and may also damage the stylus. Also the height (depth) to width aspect ratio of the form of the component may make access to the surface difficult, increasing the likelihood of collisions between the stylus arm and the workpiece surface which may, again, detrimentally affect the measurement and damage the stylus.

In order to address the above problems, Taylor Hobson Ltd of Leicester England have produced metrological apparatus sold under the trade name "Talysurf PGI Blu" which enables precision 3-D for measurement of shallow and steep-sided aspheric lenses and moulds and offers 100 nm measurement capability.

This apparatus addresses problems discussed above by enabling the orientation of a traverse unit carrying the stylus to be adjusted so that the stylus arm and the measurement path direction are inclined to the plane of a support surface, such as a turntable, on which the workpiece to be measured is mounted. Allowing the angle of the stylus arm to be adjusted reduces the possibility of the contact angle exceeding a desired limit and also should facilitate access to the surface to be measured. Setting up of the instrument at the start of a measurement procedure may, however, be more difficult for the operator because of the inclination of the traverse unit and the measurement path direction.

The invention provides a data processor for a metrological apparatus for measuring a surface characteristic of a workpiece according to claim 1 and a corresponding measuring method according to claim 11. In the following description, examples termed as "embodiments are not necessarily encompassed by the scope of the invention, which is defined by the claims.

Embodiments of the present invention facilitate setting up of a metrological instrument for a measurement procedure allowing more rapid and accurate measurements of the surface characteristic to be made.

In one aspect, the present disclosure provides a metrological apparatus for measuring a surface characteristic of a workpiece, the apparatus comprising:

a mover to carry out a measurement procedure by effecting relative movement in a measurement direction between a workpiece and a stylus such that the stylus is deflected as a stylus tip of the stylus follows surface variations along a measurement path on a surface of the workpiece;
a transducer to provide a measurement data set in a measurement coordinate system representing the deflection of the stylus at measurement points along the measurement path, the transducer having a measurement range; and
a data processor configured to:

receive nominal surface data representing the expected surface characteristic of the workpiece in a workpiece coordinate system;
determine a relationship between the measurement data in the measurement coordinate system and the nominal surface data in the workpiece coordinate system;
simulate a measurement data set for the nominal surface using the nominal surface data and the determined relationship, the simulation providing a simulated measurement data set having a simulated range of simulated measurement values;
determine whether the simulated range meets a given criterion;
if the simulated range does not meet the given criterion, adjust a selected measurement data value for a selected measurement point and repeat the simulation to determine an adjusted measurement data value for which the simulated range meets the given criterion; and
determine measurement start conditions required for a measurement procedure to provide the adjusted measurement data value for the selected measurement point.

The selected measurement point may be a first measurement point of a measurement procedure.

The given criterion may be a point at which a difference between a maximum and minimum simulated measurement value is less than a threshold value.

The given criterion may be a point at which a difference between the magnitude of the maximum simulated measurement value and the magnitude of the minimum simulated measurement value is less than a threshold value.

The adjusted measurement data value may be a measurement data value based on the selected measurement data value and a difference between maximum and minimum simulated measurement values.

The adjusted measurement data value may be a measurement data value based on a difference between the selected measurement data value and an average or mean of maximum and minimum simulated measurement values.

The adjusted measurement data value may be $G'_0 = G_0 - (G_{max}-G_{min})/2$ where $G_0$ is the selected measurement data value, and $G_{max}$ and $G_{min}$ are the maximum and minimum simulated measurement values.

The stylus may be movable by a traverse unit to move the stylus in the measurement direction.

The measurement direction may be at an angle $\beta$ to an axis, x, of the workpiece coordinate system.

A pivotal mounting may be provided for the stylus such that an arm of the stylus pivots about a pivot axis as the stylus tip follows surface variations.

The surface characteristic may be a surface form of a surface of the workpiece.

In an embodiment, a pivotal mounting is provided for the stylus such that an arm of the stylus pivots about a pivot axis through an angle $\alpha$ as the stylus tip follows surface variations, the measurement coordinate system is given by G, X, where G is related to the angle $\alpha$ and X is the measurement direction, and wherein the workpiece coordinate system is x, z, where x is a direction along a workpiece support surface of the apparatus, z is a normal to the workpiece and X is at an angle $\beta$ to x.

In an embodiment, the relationship may given by:

$$L\cos(\beta + \alpha_o) + X\cos\beta - L\cos\alpha = x_s$$

$$L\sin(\beta + \alpha_o) + X\sin\beta + \Delta Z_{col} - L\sin\alpha = z_s$$

where

$\alpha$ is the degree of deflection of the stylus arm and $\alpha = \alpha_o + \beta - (G/L)$ where G is the measurement data or transducer output;

X is the traverse or measurement direction which extends at the angle $\beta$ to the x axis; $\Delta Z_{col}$ is the distance in the z direction when the stylus tip is at a measurement point on the surface being measured from the corresponding z position at which G=0;

$\alpha_0$ is a pivot offset angle;

$x_s$, $z_s$ is the centre of the stylus tipL is the distance between the centre of the stylus tip and the pivot axis which on inversion:

$$Z_c - Z_{flat} = \Delta Z_{col} = \frac{L(\sin(\alpha - \beta) - \sin\alpha_o) - x_s\sin\beta + z_s\cos\beta}{\cos\beta}$$

$$X = \frac{L(\cos\alpha - \cos(\beta + \alpha_o)) + x_s}{\cos\beta}$$

The measurement data set may be simulated by simulating the nominal surface form and rotating the simulated nominal surface form to the measurement direction. A gauge calibration relationship relating a measurement data value and a measurement direction position to a distance $z_G$ in z may be used to determine a data set in G and X and if the measurement range G does not meet the given criterion, the selected measurement data value for the selected measurement point adjusted until the range meets the given criterion.

In an embodiment, the measurement data set may be simulated by:
simulating the nominal surface form and rotating the simulated nominal surface form by $-\beta$ so that, referring to the nominal profile as $z_s(x) + z_{flat}$, corresponding to the stylus tip centre traversing the part:

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix}$$

determining gauge calibration relationships

$$z_G = \alpha_1 G + \alpha_2 G^2 + \alpha_3 G^3$$

$$x_G = X + \beta_1 z_G + \beta_2 z_G^2 + \beta_3 z_G^3$$

deriving from the gauge relationships:

$$G = \gamma_1 z_G + \gamma_2 z_G^2 + \gamma_3 z_G^3$$

$$X = x_G - \left( \beta_1 z_G + \beta_2 z_G^2 + \beta_3 z_G^3 \right)$$

setting G to a selected measurement data value, such as zero,
determining a starting value for $Z_c$ - $Z_{flat}$ to be determined at S14 in accordance with:

$$Z_c - Z_{flat} = \Delta Z_{col} = \frac{L(\sin(\alpha - \beta) - \sin\alpha_o) - x_s \sin\beta + z_s \cos\beta}{\cos\beta}$$

$$X = \frac{L(\cos\alpha - \cos(\beta + \alpha_o)) + x_s}{\cos\beta}$$

then determining a (G, X) data set in accordance with:

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix}$$

$$G = \gamma_1 z_G + \gamma_2 z_G^2 + \gamma_3 z_G^3$$

$$X = x_G - \left( \beta_1 z_G + \beta_2 z_G^2 + \beta_3 z_G^3 \right)$$

and, if the measurement range does not meet the given criterion, adjusting a selected measurement data value for a selected measurement point and repeating the determination of $Z_c$ - $Z_{flat}$ and the (G, X) data set to determine an adjusted measurement data value for which the range meets the given criterion.

In another aspect, the present invention provides a data processor for a metrological apparatus for measuring a surface characteristic of a workpiece, the apparatus comprising:

a mover to carry out a measurement procedure by effecting relative movement in a measurement direction between a workpiece and a stylus such that the stylus is deflected as a stylus tip of the stylus follows surface variations along a measurement path on a surface of the workpiece; and

a transducer to provide a measurement data set in a measurement coordinate system representing the deflection of the stylus at measurement points along the measurement path, the transducer having a measurement range, the data processor being configured to:

receive nominal surface data representing the expected surface characteristic of the workpiece in a workpiece coordinate system;

determine a relationship between the measurement data in the measurement coordinate system and the nominal surface data in the workpiece coordinate system, which may be achieved using the stylus tip convolution discussed above;

simulate a measurement data set for the nominal surface using the nominal surface data and the determined relationship, the simulation providing a simulated measurement data set having a simulated range of simulated measurement values;

determine whether the simulated range meets a given criterion;

if the simulated range does not meet the given criterion, adjust a selected measurement data value for a selected measurement point and repeat the simulation to determine an adjusted measurement data value for which the simulated range meets the given criterion; and

determine measurement start conditions required for a measurement procedure to provide the adjusted measurement data value for the selected measurement point.

In another aspect, the present invention provides a method for facilitating measurement of a surface characteristic of a workpiece using an apparatus comprising:

a mover to carry out a measurement procedure by effecting relative movement in a measurement direction between a workpiece and a stylus such that the stylus is deflected as a stylus tip of the stylus follows surface variations along a measurement path on a surface of the workpiece; and

a transducer to provide a measurement data set in a measurement coordinate system representing the deflection of the stylus at measurement points along the measurement path, the transducer having a measurement range, the method comprising:

determining a relationship between the measurement data in the measurement coordinate system and nominal surface data representing the expected surface characteristic of the workpiece in a workpiece coordinate system, which may be achieved using the stylus tip convolution discussed above;

simulating a measurement data set for the nominal surface using the nominal surface data and the determined relationship, the simulation providing a simulated measurement data set having a simulated range of simulated measurement values; determining whether the simulated range meets a given criterion;

if the simulated range does not meet the given criterion, adjusting a selected measurement data value for a selected measurement point and repeating the simulation to determine an adjusted measurement data value for which the simulated range meets the given criterion; and

determining measurement start conditions required for a measurement procedure to provide the adjusted measurement data value for the selected measurement point.

In an embodiment, a stylus is deflected as a stylus tip of the stylus follows surface variations along a measurement path on a surface of a workpiece and a transducer provides measurement data in a measurement coordinate system. A data processor is configured to: determine a relationship between the measurement data in the measurement coordinate system and nominal surface data representing the expected surface characteristic of the workpiece in a workpiece coordinate system, which may be achieved using the stylus tip convolution discussed above;

simulate a measurement data set for the nominal surface using the nominal surface data and the determined relationship, the simulation providing a simulated measurement data set having a simulated range of simulated measurement values;

if the simulated range does not meet a given criterion, adjust a selected measurement data value for a selected measurement point and repeat the simulation to determine an adjusted measurement data value for which the simulated range meets the given criterion; and

determine measurement start conditions required for a measurement procedure to provide the adjusted measurement data value for the selected measurement point. In order to address the above problems, Taylor Hobson Ltd of Leicester England have produced metrological apparatus sold under the trade name "Talysurf PGI Blu" which enables precision 3-D for measurement of shallow and steep-sided aspheric lenses and moulds and offers 100 nm measurement capability.

This apparatus addresses problems discussed above by enabling the orientation (traverse angle) of a traverse unit carrying the stylus to be adjusted so that the stylus arm and the measurement path direction are inclined to the plane of a support surface, such as a turntable, on which the workpiece to be measured is mounted. Allowing the angle of the stylus arm to be adjusted reduces the possibility of the contact angle exceeding a desired limit and also should facilitate access to the surface to be measured. Nevertheless there is still a possibility that an operator may incorrectly set up the instrument at the start of a measurement procedure, for example may select an incorrect traverse angle or an incorrect stylus, which may result in a higher than desired contact angle or the possibility of a collision between the stylus arm and the workpiece surface.

Embodiments of the present invention aim to ameliorate the above issues.

Aspects and preferred examples of the present invention are set out in the appended claims.

Embodiments of the present invention will now be described, by way of example, with reference to the accompanying drawings, in which:

Figure 1 shows a very schematic representation of a metrological instrument of apparatus embodying the present invention looking in a direction, y, perpendicular to a measurement direction;

Figure 2 shows a functional block diagram of data processing and control apparatus of apparatus embodying the present invention;

Figure 3 shows a functional block diagram of setup functionality provided by programming of the control apparatus shown in Figure 2 for enabling a balanced gauge measurement;

Figure 4 shows a flow chart illustrating processes for enabling a balanced gauge measurement;

Figures 5 to 8 show diagrams for explaining the setup functionality shown in Figures 3 and 4; and

Figures 9 and 10 show a diagram and flow chart for explaining another method for enabling a balanced gauge measurement.

Figure 11 shows a functional block diagram of functionality provided by programming of the control apparatus shown in Figure 2 for assisting an operator in correctly setting up the metrological instrument;

Figure 12 shows a flow chart illustrating processes for assisting an operator in correctly setting up the metrological instrument;

Figure 12a shows a flow chart illustrating further processes that may be carried out for assisting an operator in setting up the metrological instrument;

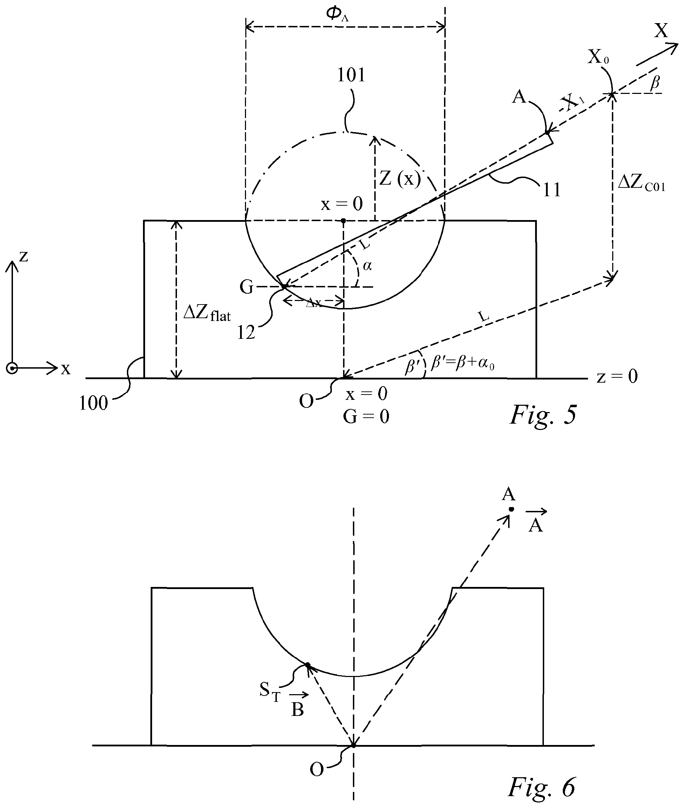

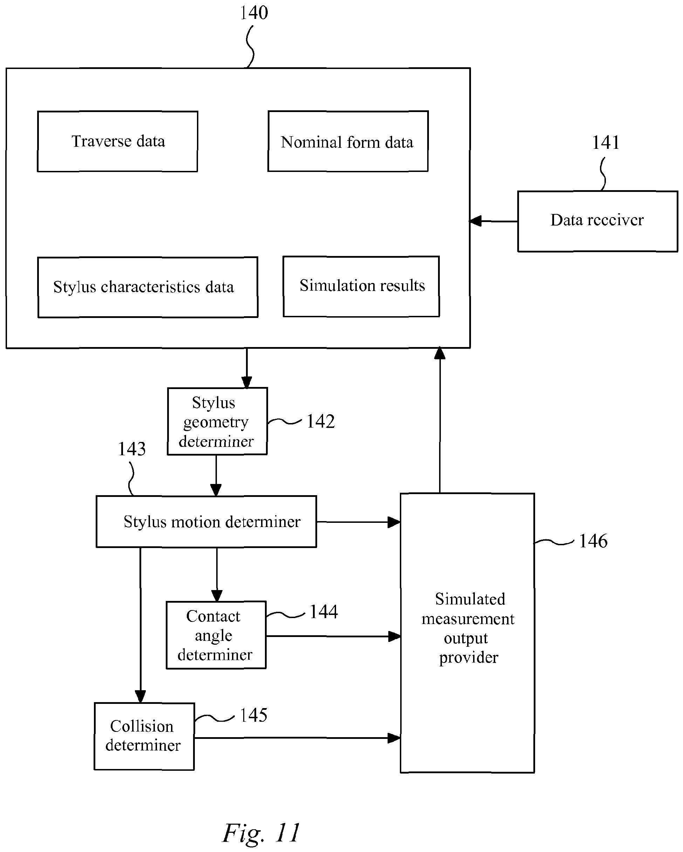

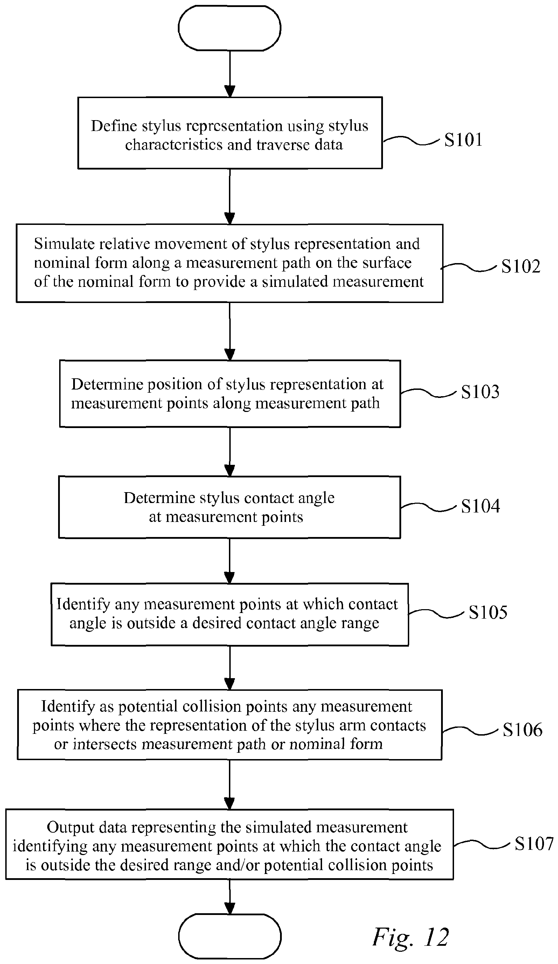

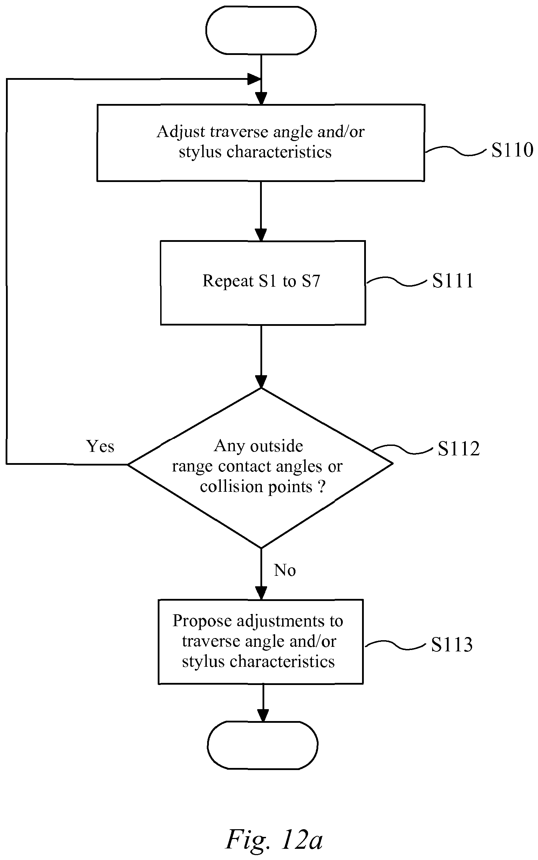

Figures 5 to 8 show diagrams for helping to explain the setup functionality shown in Figures 11 and 12; and

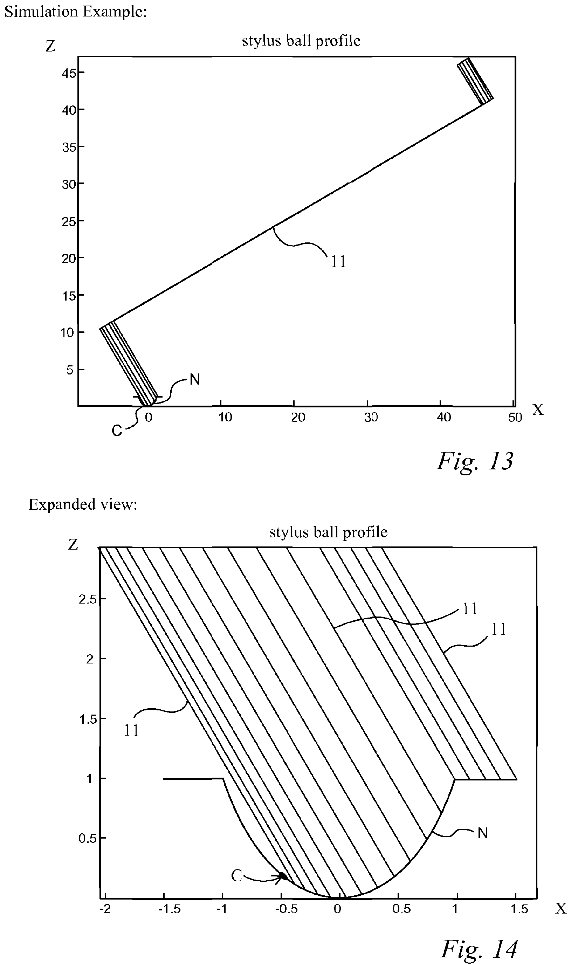

Figures 13 to 17 show examples of resulting simulations.

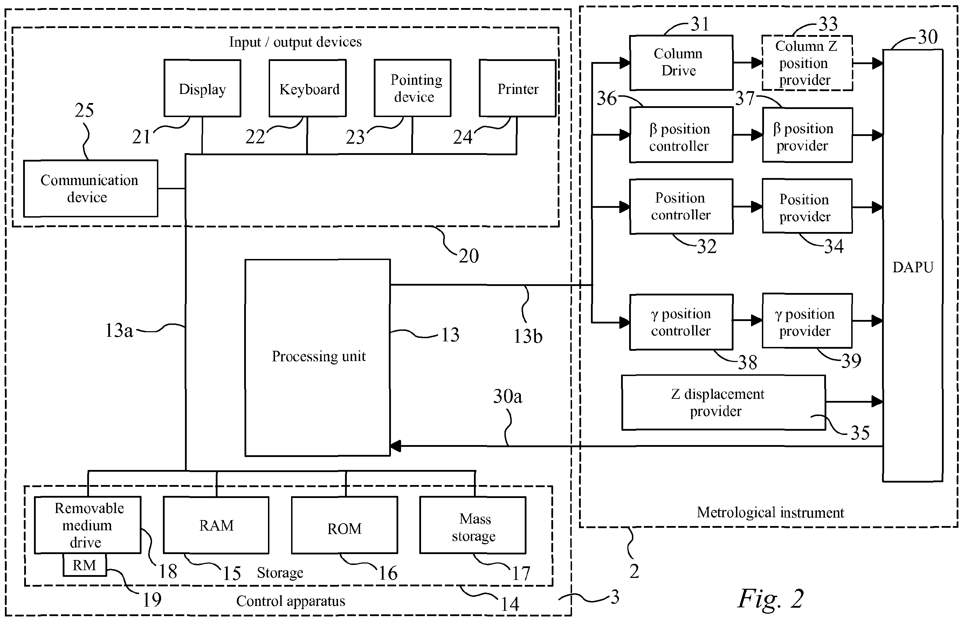

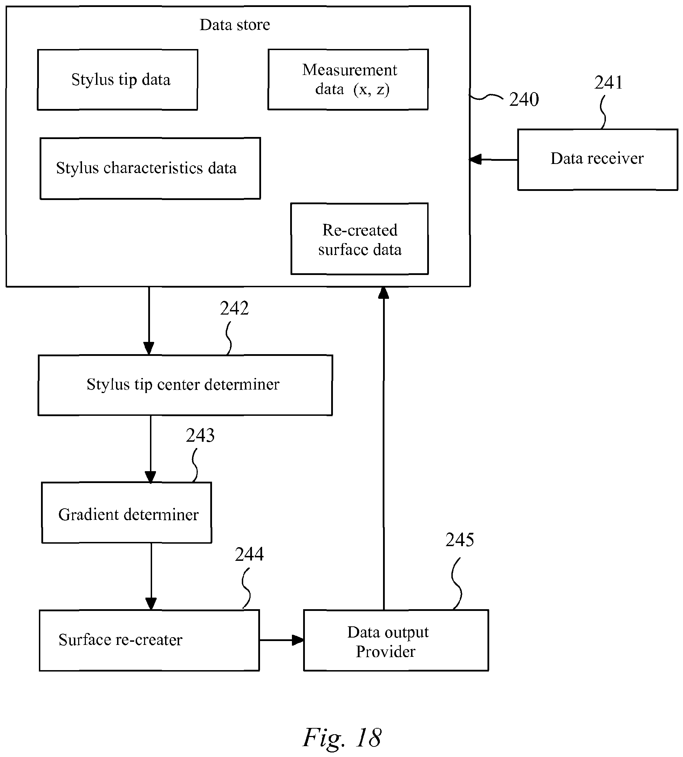

Figure 18 shows a functional block diagram of functionality provided by programming of the control apparatus shown in Figure 2 for enabling account to be taken of characteristics of a stylus tip of a stylus of the metrological instrument;

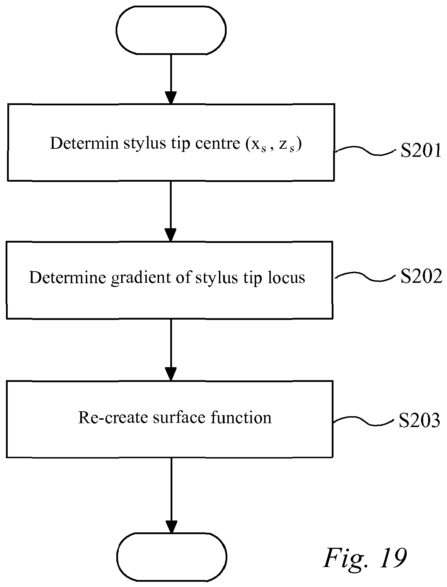

Figure 19 shows a flow chart illustrating processes for enabling account to be taken of characteristics of a stylus tip of a stylus of the metrological instrument;

Figures 5 to 8 show diagrams for explaining a stylus geometry of an example metrological instrument; and

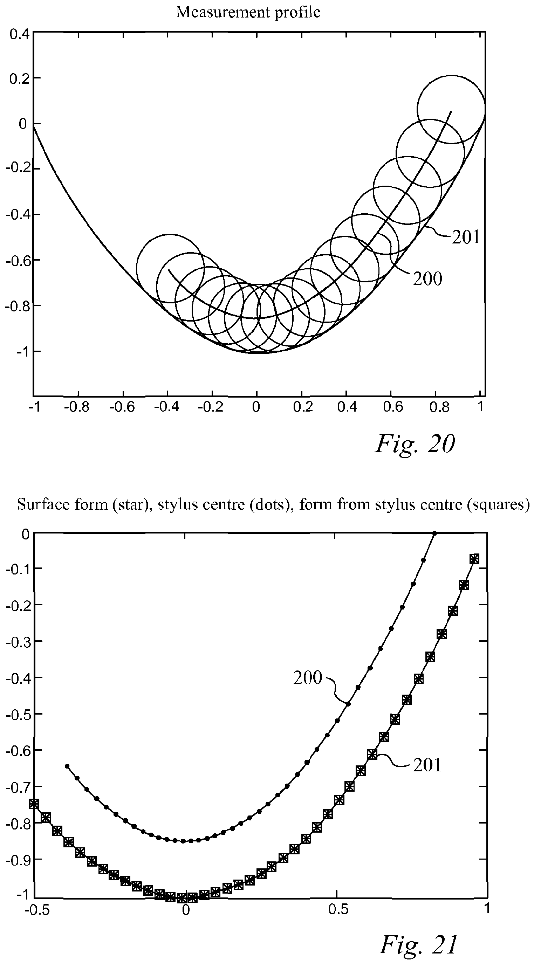

Figure 20 shows a representation of a locus of the path of the centre of the stylus tip and the surface form being measured; and

Figure 21 shows a representation of surface form derived from the stylus tip locus shown in Figure 20.

With reference to the drawings in general, it will be appreciated that the Figures are not to scale and that for example relative dimensions may have been altered in the interest of clarity in the drawings. Also any functional block diagrams are intended simply to show the functionality that exists within the device and should not be taken to imply that each block shown in the functional block diagram is necessarily a discrete or separate entity. The functionality provided by a block may be discrete or may be dispersed throughout the device or throughout a part of the device. In addition, the functionality may incorporate, where appropriate, hard-wired elements, software elements or firmware elements or any combination of these.

Referring now to the drawings, an example metrological apparatus will be described which comprises a metrological instrument and a control apparatus.

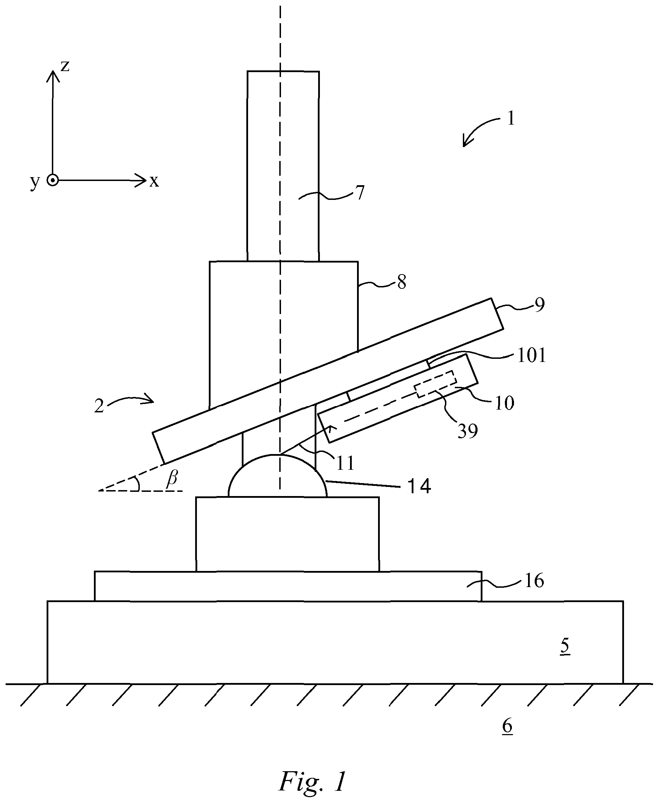

Figure 1 shows a very diagrammatic representation of the metrological instrument 2 of the metrological apparatus 1.

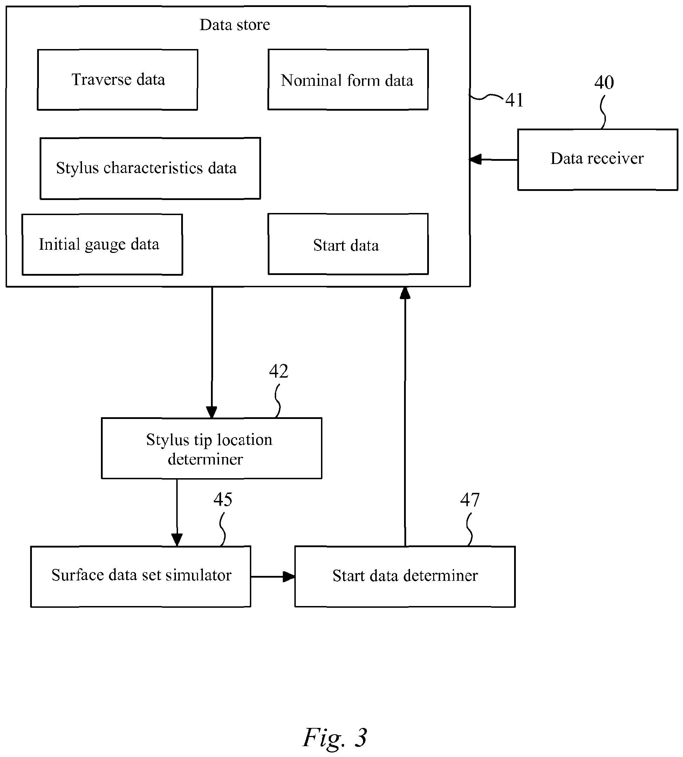

The metrological apparatus 2 has a base 5 that is designed to be supported by a workbench 6. The base 5 carries a column 7 that defines a vertical or z axis reference datum. A column carriage 8 is mounted to the column 7 so as to be movable in the z direction with respect to the column 7. The movement of the column carriage 8 is effected by a motorised drive arrangement (not shown), such as for example a. leadscrew, pulley or other suitable drive arrangement. The base 5 also carries turntable 16 to support a workpiece 14. The turntable 16 has a centring and levelling mechanism (not shown) such as that shown in Figures 2 and 3 of GB 2,189,604 A.

The column carriage 8 carries a traverse unit 9, which is arranged at an angle β (the transverse angle) to the x-axis (which in the example is represented by the plane of the turntable surface and is generally the horizontal). The transverse unit 9 is movable relative to the column carriage 8 by means of a motorised drive arrangement (not shown) along a straight reference datum (not shown) provided by the traverse unit 9. The direction of this straight reference datum is determined by the orientation of the transverse unit so that the traverse unit 9 is movable in an X direction which extends at the angle β to the x-axis.

The traverse unit 9 carries a measurement probe (or gauge unit) 10 which consists of a pivotally mounted stylus arm (shown very diagrammatically in Figure 1 in dotted lines within the traverse unit 9) carrying at its free end a stylus arm 11 having a stylus tip 12 which in operation comes into contact with the surface of the workpiece or component under test during a measurement operation so that, as the traverse unit 9 is moved in the measurement direction, the stylus arm 11 pivots to enable the stylus tip 12 to follow surface variations along a measurement path on the surface. Deflection of the stylus arm is detected by a measurement transducer (or displacement provider) 39 shown in dotted lines in Figure 1. The measurement probe 10 may be mounted to the traverse unit 9 by a y-position adjuster (not shown) so as to be movable in the y-direction with respect to the traverse unit 9. The movement of the measurement probe 10 in the y-direction may be effected by a manual or motorised leadscrew, pulley or other drive arrangement (not shown).

In an example, the traverse unit 9 may be mounted to the column carriage 8 by means of a pivot pin to enable the angle β of the traverse unit 9 with respect to the x-axis to be adjusted. In this particular example, the angle β of the traverse unit 9 is manually adjustable and the traverse unit 9 is held in place at the manually adjusted angle by means of an air brake (not visible in the Figure). As another possibility, the adjustment of the angle β may be automated. As another possbility, the angle β may for some applications be fixed.

Figure 2 shows a block diagram illustrating functional components of the metrological instrument 2 and the control apparatus 3 of the metrological instrument 1.

Referring now to Figure 2, the control apparatus 3 is generally a personal computer and has a processing unit 13 coupled via a bus 13a to associated data and program instruction/software storage 14 in the form generally of RAM 15, ROM 16, a mass storage device 17 such as a hard disc drive and at least one removable medium drive 18 for receiving a removable medium (RM) 19, such as a CD-ROM, solid state memory card, DVD, or floppy disc. As another possibility, the removable medium drive may itself be removable, for example it may be an external hard disc drive.

The control apparatus is also coupled via the same or a different bus to input/output devices 20 comprising in this example a display 21, a keyboard 22, a pointing device 23 such as a mouse, a printer 24 and, optionally, a communications device 25 such as at least one of a MODEM and a network card for enabling the control apparatus 3 to communicate signals S via a wired or wireless connection with other control apparatus or computers via a network such as the Internet, an intranet, a WAN or a LAN.

The processing unit 13 is programmed by program instructions and data provided by being at least one of: downloaded as a signal S via the communications device 25; pre-stored in any one or more of ROM 16, RAM 15 and mass storage device 17; read from a removable storage medium 19 received by the removable medium drive 18; and input by the user using the keyboard 22.

The metrological instrument 2 has a data acquisition and processing unit (DAPU) 30 that communicates with the processing unit 13 of the control apparatus 3 via an appropriate link, for example a serial link, 30a to enable data regarding a measurement operation to be communicated to the control apparatus 3.

The control components of the metrological apparatus 2 comprise a column drive controller 31 for driving the carriage 8 up and down the column in the z direction, a measurement direction position controller 32 for driving the measurement probe or gauge unit along the reference datum provided by the traverse unit 9 in the measurement direction X at an angle β to the x-axis and an interferometric z displacement provider 35 for providing a measure of the z displacement of the stylus tip 12 as the stylus arm 11 follows the surface being measured during movement of the traverse unit 9 along a measurement path in a direction at an angle β to the x-axis.

If rotation of the turntable is automated, then the metrological apparatus will also comprise a γ (where γ represents the angle of rotation of the turntable 16 about its spindle axis) position controller 38 for controlling rotation of the turntable 16. Similarly, if the attitude of the traverse unit 9 is adjustable and this adjustment is automated, then a β position controller 36 will be provided for changing the attitude β of the traverse unit 9. γ and β position providers 39, 37 (which may for example be shaft encoders, for example optical shaft encoders, or a linear grating type position provider) are provides to supply signals respectively indicating the angles γ and β to the DAPU 30. Generally the interferometric z displacement provider 35 will be provided within the traverse unit 9.

The measurement direction position controller 32 is associated with a position provider 34 that may be, for example, a shaft encoder associated with a motor providing the position controller 32 or may be a linear grating type of transducer. The column drive 31 may also be associated with a column z position provider 33 (shown in phantom lines in Figure 2), for example a shaft encoder associated with a motor providing the column drive 31, or the column z position may be determined in an open loop manner directly from the column motor drive signal. As show in Figure 2, the column drive 31 and position controller 32 (and other controllers if present) are coupled to the control apparatus 3 (via a link 13b and appropriate interfaces, not shown) for control by instructions from the control apparatus 3. At least some of these instructions may be supplied by the user.

The measurement probe or gauge unit is in this example the measurement probe used in the instruments supplied by Taylor Hobson as the Form Talysurf PGI series and is described in detail in US-A-5,517,307 to which reference should be made for further information. In particular the measurement probe or gauge unit may be based on Taylor Hobson's Form Talysurf PGI 1240 metrological instrument, described in the brochure produced by Taylor Hobson entitled "Form Talysurf PGI 1240, Aspherics Measurement system". This Form Talysurf PGI series of metrological instruments is particularly suited to measuring the surface form of surfaces having significant form because, as described in US-A-5,517,307, the interferometric z displacement provider 35 uses a curved diffraction grating that has a radius of curvature which is coincident with the axis about which the stylus arm pivots to provide more accurate z displacement measurements over a longer range.

The processing unit is programmed by program instructions to enable carrying out of measurements further details of examples of such programming may be found in WO 2010/943906. In the following (see Figures 5 to 8):

O is the origin, that is the location at which x=0, z=0

$\Phi_A$ is the nominal base diameter of the workpiece or component whose surface form is to be measured, for example an aspheric lens mould 100 as shown in solid lines in Figure 5 or an aspheric lens mounted on the attached to a base, the lens being illustrated by the dot-dash line 101 in Figure 5;

$\alpha$ is the stylus deflection angle between the line passing through the pivot axis A and the centre of the stylus tip 12 and the x axis and represents the degree of deflection of the stylus arm;

G is the gauge reading which as will be explained below is related to the stylus deflection angle $\alpha$;

$\beta$ is the angle of the traverse unit to the x axis;

X is the traverse or measurement direction which extends at the angle $\beta$ to the x axis;

$X_1$ is the distance the traverse unit has moved in the traverse or measurement direction X from a zero position $X_0$;

z(x) is the distance in the z direction of a point on the surface being measured from a top surface of the flat part (the body of the mould or the base upon which the aspheric lens is mounted);

$\Delta x$ is the distance in the x direction of the centre of the stylus tip 12 from x=0 where x=0 corresponds to the turntable spindle axis on which the component to be measured will be centred and aligned, for example as discussed in WO2100/043906, so that a rotational axis of the component (the optical axis in the case of an aspheric lens) is coincident with and aligned to the spindle axis;

$\Delta Z_c$ or $\Delta Z_{col}$ is the distance in the z direction when the stylus tip is at a measurement point on the surface being measured from the corresponding z position at which G=0 (see Figure 5);

$\Delta z_{flat}$ is the distance in the z direction from z=0 to the top surface of any flat part, part 100 in Figure 5;

$L_0$ is the length of the stylus arm 11;

A is the location of the pivot axis of the stylus arm;

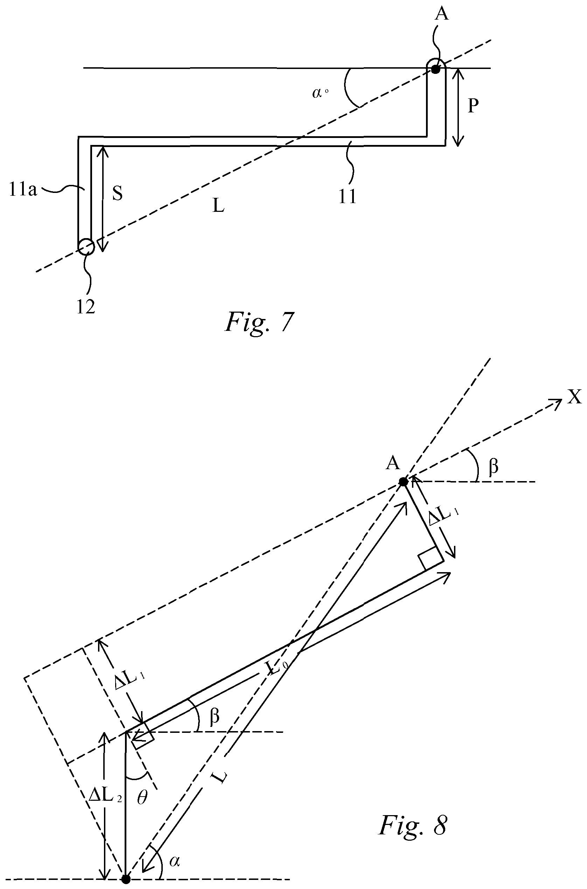

$\alpha_0$ is the pivot offset angle which as shown in Figure 7 is an angle between a line parallel to the x axis passing through the pivot axis A and a line passing through the pivot axis A and the centre of the stylus tip 12 with the stylus arm parallel to the traverse axis and is determined, as illustrated in Figure 7, by the offset P of the pivot axis A from the stylus arm, the length of the stylus arm L and the length S of the stylus shank 11a from the stylus arm to the centre of the stylus tip 12;

L is the distance between the centre of the stylus tip 12 and the pivot axis A, which distance is determined by the length of the stylus arm L, the pivot offset P and the length S of the stylus shank 11a from the stylus arm to the centre of the stylus tip 12.

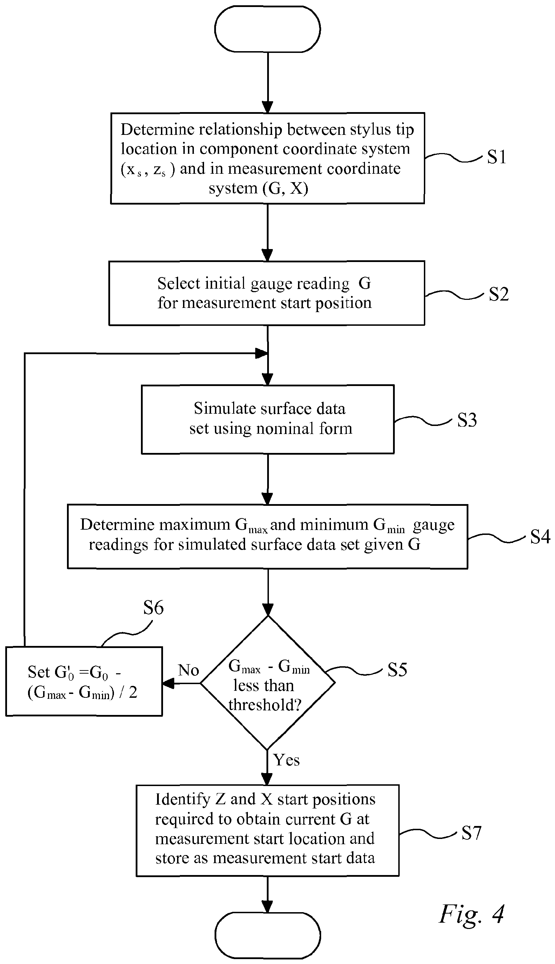

Figure 3 shows a functional block diagram illustrating functionality provided by programming of the processor unit to facilitate efficient use of the measurement range of the gauge, such that a measurement of a given surface form (component) exhibits opposite polarity extreme excursions of the same magnitude, that is the measurement is a "balanced gauge" measurement. Figure 4 shows a flow chart illustrating processes carried out by in order to facilitate a "balanced gauge" measurement whilst Figures 5 to 8 are diagrammatic representations of assistance in explaining these processes.

As shown in Figure 3, the gauge balancing functionality includes a data receiver 40 (which may be provided by the input/output devices shown in Figure 2) to receive data and store the data in a data store 41 which may be provided by, for example, any one or more of the RAM 15, ROM16 and/or mass storage 17 shown in Figure 2. As will be explained below, data stored in the data store 41 includes: initial gauge data $G_0$; traverse angle $\beta$; a nominal form of the surface of the workpiece to be measured, that is the form that the surface was designed or intended to be and the height $\Delta z_{flat}$ which as set out above is the distance in the z direction from z=0 to the top surface of the flat part; stylus characteristics data including, for example, the length L of the stylus arm 11, a pivot offset angle $\alpha_0$, the length S of a stylus shank projecting from the stylus arm 11 and carrying at its free end the stylus tip 12. The data store 41 also provides storage for storing start data determined by the functionality to be described below.

The functionality shown in Figure 3 includes a stylus tip location determiner 42 for determining a relationship between a stylus tip location ($x_s$, $z_s$) in a component coordinate system x, z (where $x_s$, $z_s$ represents the location of a centre of a sphere defined by a contact surface of the stylus tip) and a stylus tip location in a measurement coordinate system (G, X) where G represents the gauge data and $X_1$ represents the position along the traverse direction X, a surface data set simulator 45 for simulating the form of the surface to be measured using the nominal form data in the data store 41, which may be achieved using the stylus tip convolution discussed below, and a start data determiner 47 for determining z and x start positions for the gauge data to facilitate a balanced gauge measurement for the surface form under consideration starting from a given $x_s$, $z_s$ stylus tip measurement start location.

The processes now to be described with reference to Figure 4 in order to facilitate a balanced gauge measurement may be carried out using the functionality described with reference to Figure 3 or any other appropriate functionality.

In order to explain the processes shown in Figure 4, reference should also be made to Figures 5 to 8 which illustrate aspects of the geometry of the metrological instrument.

Referring to Figures 5 to 8, the vector from origin O to pivot location A in Figure 6 is given by:

$$\vec{A} = (L + X_1)(\hat{i}\cos(\alpha_o + \beta) + \hat{k}\sin(\alpha_o + \beta)) + \hat{k}\Delta Z_{col} \qquad 1)$$

where $\hat{i}$ and $\hat{k}$ are the unit vectors in the x and z directions.

(In the example illustrated in Figure 5 the traverse unit has been driven in the negative X direction from $X_0$ and so $X_1$ has a negative value.)

The vector $\vec{B}$ from origin O to the stylus tip centre in Figure 6 is given by:

$$\vec{A} - L(\hat{i}\cos\alpha + \hat{k}\sin\alpha) = \hat{i}\Delta x + \hat{k}(\Delta Z_{flat} + Z(\Delta x)) \equiv \hat{i}\Delta x_s + \hat{k}z_s \qquad 2)$$

The gauge reading G and its relationship with the stylus deflection angle $\alpha$ are given by:

$$G = L(\alpha_o + \beta - \alpha) \quad \Rightarrow \alpha = \alpha_o + \beta - (G/L) \qquad 3)$$

Extracting the orthogonal components (x,z) from equations 1 and 2 allows a pair of relationships to be defined that relate the stylus tip centre values ($x_s$,$z_s$) in terms of the stylus and instrument parameters as follows:

$$L\cos(\beta + \alpha_o) + X\cos\beta - L\cos\alpha = x_s$$
$$L\sin(\beta + \alpha_o) + X\sin\beta + \Delta Z_{col} - L\sin\alpha = z_s \qquad 4)$$

Data representing the nominal form of the component to be measured may be input by the operator but may be pre-stored. Again, the data store may store data representing various different nominal surface forms for selection by the user.

Figures 7 and 8 in particular show the geometry and dimensions of the stylus. This data is either pre-stored or input by the operator. Where a number of different styli are available, the operator may select the stylus characteristics data form a number of pre-stored sets of stylus characteristics data. As another possibility, the stylus itself may carry the data in a local non-volatile memory or may carry identification data identifying the stylus so that the control apparatus can select the correct set of stylus data from its data store. In this example, the stylus data includes the length $L_0$ is of the stylus arm 11, the pivot offset angle $\alpha_0$ which as shown in Figure 7 is an angle between a line parallel to the x axis passing through the pivot axis A and a line passing through the pivot axis A and the centre of the stylus tip 12 with the stylus arm parallel to the traverse axis and is determined, as illustrated in Figure 7, by the offset P of the pivot axis A from the stylus arm, the length of the stylus arm L and the length S of the stylus shank 11a from the stylus arm to the centre of the stylus tip12, and the length S of the stylus shank 11a from the stylus arm to the centre of the stylus tip 12.

The traverse angle $\beta$ will generally be input by the operator but could be determined by detecting the degree of rotation using an appropriate transducer. The measurement step $X_i$ may be pre-defined but could be operator-selectable.

The stylus characteristics data also includes the geometry and dimensions of the stylus tip. In this example, the stylus tip is in the form of a sphere of given radius r. The centre of that sphere will not coincide with the point on the stylus tip that contacts the surface being measured. If the nominal form of the component to be measured is represented as z(x) then it has a gradient of $\frac{dz}{dx} = \tan\Psi$. For a stylus tip of radius r traversing this surface, the tip centre is then defined by

$$z_s = z + r\cos\Psi$$
$$x_s = x - r\sin\Psi \qquad 5)$$

where the point of contact between the stylus tip and the surface is (x, z). These stylus tip centre values ($x_s$, $z_s$) are used throughout the following.

In order to determine $\alpha$ (and so G), Zc and X, the equations 4) above may be inverted to yield:

$$Z_c - Z_{flat} = \frac{L(\sin(\alpha - \beta) - \sin\alpha_o) - x_s\sin\beta + z_s\cos\beta}{\cos\beta}$$

$$X = \frac{L(\cos\alpha - \cos(\beta + \alpha_o)) + x_s}{\cos\beta}$$

6)

At S1 in Figure 4, equation 6) is used to determine the relationship between the stylus tip location $(x_s, z_s)$ in the component coordinate system $(x, z)$ and in the measurement system $(G,X)$. The stylus and instrument parameters $\alpha_o$, $\beta$ and L may be pre-stored f they are fixed for the instrument but will generally be input by the operator via the data receiver during the set up procedure prior to starting a measurement operation for a particular surface form. As another possibility, the data store may store various different stylus and instrument parameters and the operator may select the parameters appropriate for the selected stylus and traverse angle.

An initial gauge reading for a measurement start position is determined at S2 and a simulated surface data set is determined at S3, using the stylus tip convolution discussed above (with reference to Figure 4). Now considering simulating the measurement of $(x_s, z_s)$, if the gauge signal at the beginning of the measurement simulation $(G_0)$ is set at, say, zero at S2, then since $\alpha = \alpha_o + \beta - (G/L)$ generally, this inverted equation may be solved for X and $Z_c$-$Z_{flat}$. The original main equation pair 4) may also be usefully inverted to yield (G, X) in terms of $(x_s, z_s)$:

$$X_\pm = \frac{-B \pm \sqrt{B^2 - 4C}}{2}$$

7)

where

$$B = 2(L\cos\alpha_o + (Z_c - z)\sin\beta - x_s\cos\beta)$$

$$C = \left(x^2 - 2Lx\cos(\beta + \alpha_o) + 2L(Z_c - z_s)\sin(\beta + \alpha_o) + (Z_c - z_s)^2\right)$$

and

$$\alpha = \tan^{-1}\left(\frac{L\sin(\beta + \alpha_o) + X\sin\beta + (Z_c - z_s)}{L\cos(\beta + \alpha_o) + X\cos\beta + x_s}\right)$$

8)

The simulation selects the most appropriate one of the two solutions for X. In this example, for the data pair adjacent to the first $(x_s, z_s)$ data pair, the correct solution for X is chosen to be the one that is closest to the original X value. This enables the determination of $\alpha$ and hence G for the simulated surface form data set. The process of comparing the two possible solutions for the $j^{th}$ value of X with the known $(j-1)^{th}$ value enables the entire data set to be analysed to determine a set of values for G for the simulated surface form data set.

The maximum and minimum values of G, $G_{max}$ and $G_{min}$, in the determined set of values for G are then identified at S4 and, if at S5 the difference between the magnitudes $|G_{max}|$ and $|G_{min}|$ is not below a determined threshold (which may be preset or defined by the operator), $G_o$ is updated at S6 to be:

$$G'_o = G_o - (G_{max} - G_{min})/2$$

9)

and S3 and S4 repeated.

When the difference between $|G_{max}|$ and $|G_{min}|$ is determined at S5 to be below the threshold, this iterative process is halted, at which point the starting values for both X and G will have been determined. Once these are known then $Z_c$-$Z_{flat}$ can be determined and the values of z and X required for the measurement start position to achieve a balanced gauge measurement stored so that, once the operator has completed the initial centring and levelling procedures and inputs a command to the control apparatus to start a measurement, then the control apparatus can drive the carriage 8 and the traverse unit 9 to the z and X positions to achieve a balanced gauge measurement. This should facilitate more accurate measurement and also should speed up the measurement process because the operator does not have to try to determine the best z and X starting positions by trial and error something which would be a time-consuming procedure because generally there may be more than one combination of z and X that results in a given stylus angle $\alpha$. The described process is particularly advantageous where the traverse unit extends at an angle to the x axis because, in those circumstances, the relationship between the gauge signal G and z and X is not intuitive or straightforward and so it is even more difficult for the operator to try to determine, by trial and error, a starting value for G to achieve a balanced gauge measurement.

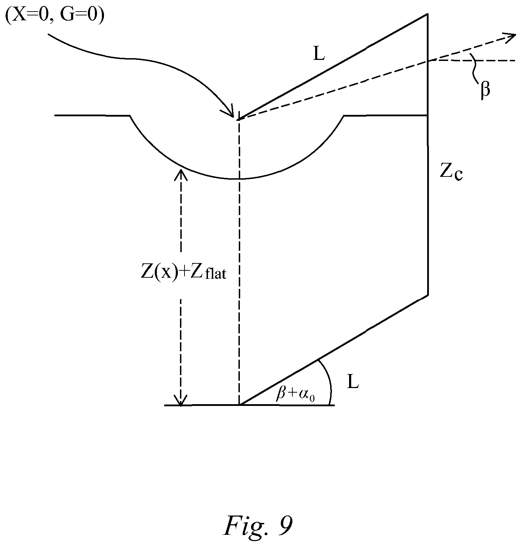

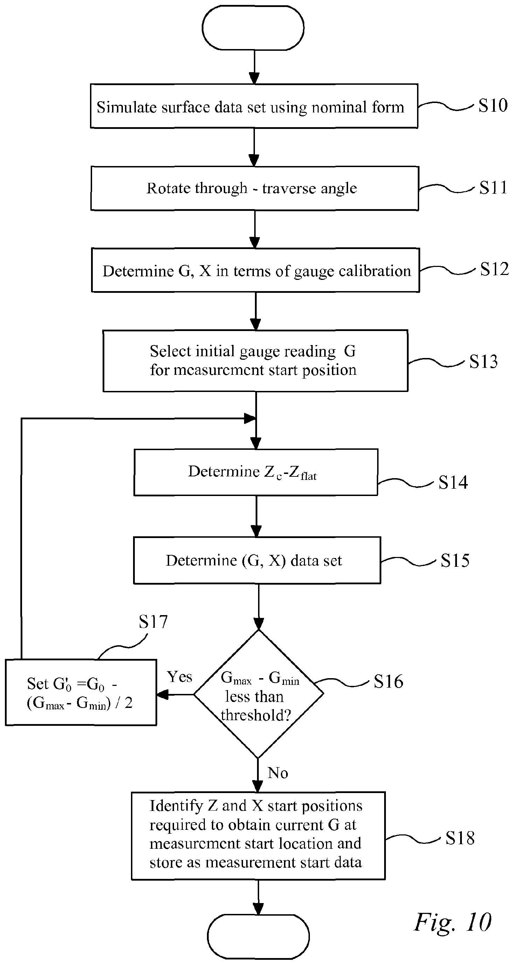

Another way of facilitating a balanced gauge measurement using calibration coefficients of the gauge will now be described with the aid of Figure 9 which shows a diagram of a geometrical representation of part of the stylus and traverse geometry and Figure 10 which shows a flow chart illustrating the process.

At S10 in Figure 10, the nominal surface form or profile is simulated and at S11 this nominal surface form or profile is rotated to lie in the frame of reference of the stylus by rotation by $-\beta$ (-traverse angle) about the location $(0, Z_c)$ so as to lie in the frame of reference of the stylus. So, for brevity referring to the nominal profile as $z(x) + z_{flat}$ :

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix} \qquad 10)$$

The gauge (transducer 39 in Figure 1) has gauge calibration relationships given by:

$$z_G = \alpha_1 G + \alpha_2 G^2 + \alpha_3 G^3$$
$$x_G = X + \beta_1 z_G + \beta_2 z_G^2 + \beta_3 z_G^3 \qquad 11)$$

The relationship for $z_G$ may be inverted by a least-mean squares approach and the relationship for $x_G$ may be simply re-expressed to give, at S12:

$$G = \gamma_1 z_G + \gamma_2 z_G^2 + \gamma_3 z_G^3$$
$$X = x_G - \left( \beta_1 z_G + \beta_2 z_G^2 + \beta_3 z_G^3 \right) \qquad 12)$$

These relationships may be pre-stored from an earlier gauge calibration so that data representing G and X on the basis of the gauge calibrations is provided with the measurement apparatus or may be calculated when the gauge is calibrated by an operator.

The subsequent procedure is similar to that shown in Figure 4 in that the gauge signal is set to zero at S13 in Figure 10 for the start of the $(x_s, z_s)$ data. This, as discussed above, defines $\alpha$ and so enables a starting value for $Z_c - Z_{flat}$ to be determined at S14 in accordance with equation 6. The corresponding (G, X) data set is then determined at S15 in accordance with equations 10 and 12.

Assuming that the threshold criterion at S16 is not met, then a new starting value for G ($G_o$) is determined at S17 as before in accordance with equation 9 and at S14 the equivalent $\alpha$ is determined from equation 3 and an updated value for $Z_c - Z_{flat}$ generated in accordance with equation 6 from which an updated (G, X) data set is determined at S15. S14 to S17 are repeated until the difference between the magnitudes $|G_{max}|$ and $|G_{min}|$ is below a threshold at which point the starting values for both X and G to provide a balanced gauge measurement have been determined. Once these are known then $Z_c - Z_{flat}$ can be determined and the values of z and X required for the measurement start position to achieve a balanced gauge measurement stored so that, once the operator has completed the initial centring and levelling procedures and inputs a command to the control apparatus to start a measurement, then the control apparatus can drive the carriage 8 and the traverse unit 9 to the z and X positions to achieve a balanced gauge measurement. As before, this should facilitate more accurate measurement and also should speed up the measurement process because the operator does not have to try to determine the best z and X starting positions by trial and error something which would be a time-consuming procedure because there may be more than one combination of z and X that results in a given stylus angle $\alpha$. The described process is particularly advantageous where the traverse unit extends at an angle to the x axis because, in those circumstances, the relationship between the gauge signal G and z and X is not intuitive or straightforward and so it is even more difficult for the operator to try to determine, by trial and error, at a starting value for G to achieve a balanced gauge measurement.

Subsequent measurements may be carried out in known manner, for example as discussed in WO 2010/043906.

Figure 11 shows a functional block diagram illustrating functionality provided by programming of the processor unit to assist an operator in setting up the metrological instrument so as to avoid or at least reduce the possibility of an out-of-range contact angle or a collision between the stylus arm and component or workpiece under test.

As shown in Figure 11, the set up assistance functionality includes a data receiver 141 (which may be provided by the input/output devices shown in Figure 2) to receive data and store the data in a data store 140 which may be provided by, for example, any one or more of the RAM 15, ROM16 and/or mass storage 17 shown in Figure 2. As will be explained below, data stored in the data store 140 includes: traverse data including the traverse angle $\beta$ and the measurement step $X_i$ in the traverse direction; a nominal form of the surface of the workpiece to be measured, that is the form that the surface was designed or intended to have, and the height $\Delta z_{flat}$ which as set out above is the distance in the z direction from z=0 to the top surface of the flat part 100; stylus characteristics including, for example, the length L of the stylus arm 11, a pivot offset angle $\alpha_0$, the length S of a stylus shank projecting from the stylus arm 11 and carrying at its free end the stylus tip 12 and the dimensions and geometry of the stylus tip. The data store 140 also provides storage for simulation results.

The functionality shown in Figure 11 includes: a stylus geometry determiner 142 that uses the stylus characteristics to define a geometrical representation of the stylus; a stylus motion determiner 143 that uses the geometrical representation of the stylus, the nominal form and the traverse data to determine what the position and orientation of that stylus arm would be at each measurement point $X_i$ as the stylus tip follows a measurement path on a surface of the nominal form; a contact angle determiner 144 to determine the contact angle of the stylus tip at each measurement point using the determined position and orientation of that stylus arm at each measurement point $X_i$ and the known the dimensions and geometry of the stylus tip; a collision determiner 145 to determine the possibility of a collision between the stylus arm and the workpiece or component at each measurement point using the determined position and orientation of the stylus arm at each measurement point and the nominal form; and a simulated measurement output provider for outputting the simulation results to a resource such as a display, printer, network connection or another computer with any measurement points with out-of-range contact angles or collisions between the stylus arm and the workpiece or component highlighted, for example displayed or printed in another colour such as red.

Processes will now to be described with reference to Figures 12 and 12a that may assist an operator in setting up the metrological instrument to avoid or reduce the possibility of out-of-range contact angles or collisions. These processes may be carried out using the functionality described with reference to Figure 11 or any other appropriate functionality.

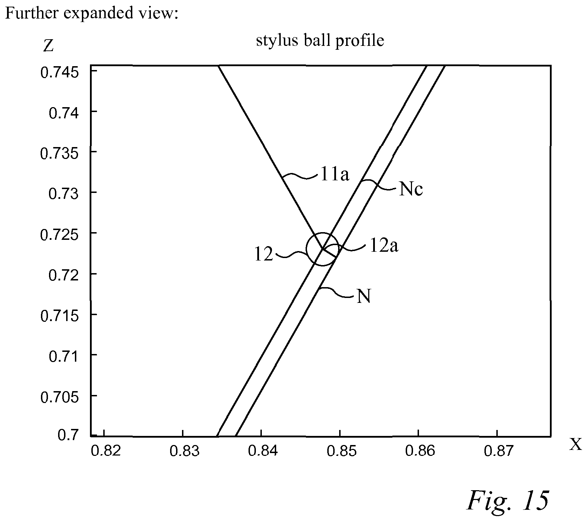

In order to explain the processes shown in Figures 12 and 12a, reference is made to Figures 15 to 18 which illustrate aspects of the geometry of the metrological instrument.

At S101 in Figure 12, a stylus representation is defined using the stylus characteristics and the traverse data. This stylus representation represents the stylus geometry and orientation in relation to the nominal form. The stylus representation and the nominal surface are for convenience represented in the same coordinate space, either that of the nominal surface, that is (x, z) or the measurement coordinate space (G (or $\alpha$), X), in accordance with the relationships set out in equation 18.

At S102, relative movement between the stylus representation and the nominal form along the measurement direction X with the stylus tip following the nominal form is simulated to provide a simulated measurement and at S103 the relative positions of the stylus and the nominal form are determined at each measurement point.

At S104 the contact angle between the stylus and the nominal form is determined for each measurement point. In this example, the contact angle is determined to be the angle between the normal to the local nominal form gradient or tangent and the stylus shank direction or axis at the measurement point so that when the stylus shank is perpendicular to the local gradient at a measurement point the contact angle for that measurement point is zero. Other ways of defining the contact angle are possible.

At S105 any measurement points for which the contact angle is out of a desired range, for example exceeds a threshold, is identified. At S106, a determination is made at each measurement point as to whether any part of the stylus representation other than the stylus tip (that is the stylus arm or shank, for example) contacts or intersects the nominal form and if so that measurement point is identified as a potential collision point. It will of curse be understood that S106 could be carried out before S104 and/or S105.

At S107 the resulting data is output to a resource such as a display or printer of the input/output devices of Figure 2 or to the communication device for supply to a remote device, such as a computer or display or printer, directly or via a network. The output data may simply alert the operator to the possibility of an out-of-range contact angle and/or potential collision but more usefully may show the position of the stylus at each measurement point, either as a static image or as an animation, with any out-of-range contact angles and/or potential collision points highlighted, for example shown in a different colour such as red.

If the output data shows any out-of-range contact angles and/or potential collision points, the operator can then select a different traverse angle β and re-run the simulation. If a traverse angle cannot be found that does not result in the simulation indicating an out-of-range contact angle and/or a potential collision, the operator may select a different stylus, for example a stylus with a different shank angle θ and re-run the simulation.

Figure 12a shows a flow chart illustrating further processes that may be carried out for assisting an operator in correctly setting up the metrological instrument, if the processes shown in Figure 12 identify an out-of-range contact angle and/or a potential collision.

Thus if the processes shown in Figure 12 identify an out-of-range contact angle and/or a potential collision, the simulated traverse angle β and/or stylus characteristics such as the shank angle θ may be adjusted at S110 in Figure 12a and S101 to S107 of Figure 12 then repeated at S111. If an out-of-range contact angle and/or a potential collision is detected at S112 then the simulated traverse angle β and/or stylus characteristics such as the shank angle θ may be re-adjusted and S111 to S112 repeated until no out-of-range contact angle and/or a potential collision is detected, at which point adjustments to the traverse angle and/or stylus characteristics may be proposed to the operator by outputting to the resource as discussed above. The process shown in Figure 12a may try different traverse angles first and only try different stylus characteristics if a traverse angle cannot be found that does not cause an out-of-range contact angle and/or a potential collision, or vice versa. Different stylus characteristics may be selected from stylus characteristics stored in the data store of the metrological apparatus or stylus characteristics for available alternative styli requested from and input by the operator. The stylus characteristic that is adjusted could be the shank angle θ or another characteristic such as the stylus arm or shank length.

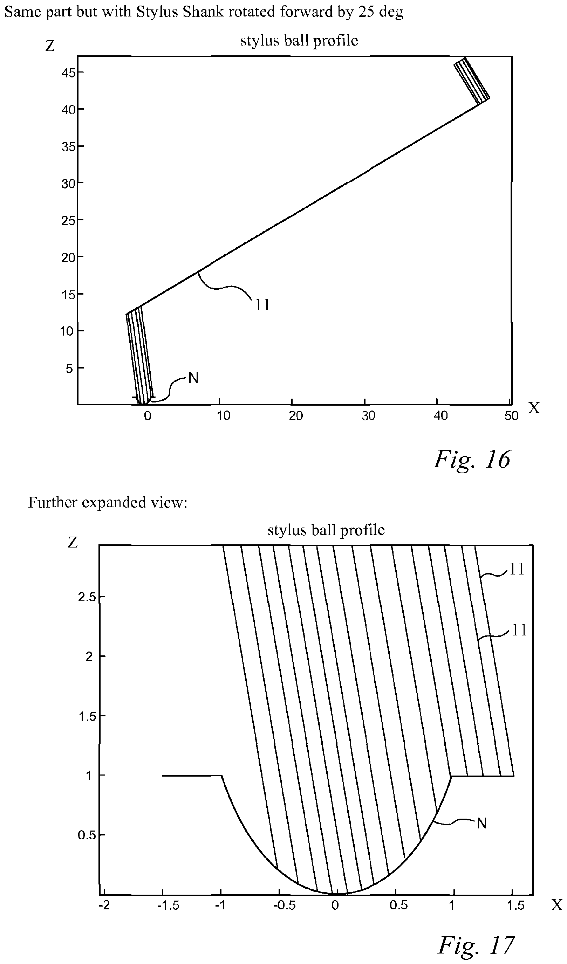

Figures 13 to 17 show results of simulations (in x, z coordinate space) carried out in accordance with Figure 12 with Figure 13 showing the representation of a stylus 11 at various measurement points along a measurement path of a nominal form N with an area of out-of-range contact angles C highlighted (in the actual simulation C is shown in red, the stylus arm in green and the nominal form in blue; it will be appreciated that other colours could be selected). Figure 14 shows part of Figure 13 enlarged to illustrate the area of out-of-range contact angles C more clearly whilst Figure 15 shows an enlargement of one stylus position to show the simulation of the stylus tip 12 and the relative location of the stylus tip centre 12a and the path of the stylus tip centre Nc. Figures 16 and 17 are views similar to Figures 13 and 14 to show the effect of changing the shank angle. In this example, the stylus shank has been rotated forwards 25 degrees and the measurement path no longer shows any out-of-range contact angles.

Figure 18 shows a functional block diagram of functionality provided by programming of the control apparatus shown in Figure 2 for enabling account to be taken of characteristics of a stylus tip of a stylus of the metrological instrument.

As shown in Figure 18, this functionality includes a data receiver 241 (which may be provided by the input/output devices shown in Figure 2) to receive data and store the data in a data store 240 which may be provided by, for example, any one or more of the RAM 15, ROM16 and/or mass storage 17 shown in Figure 2. Data stored in the data store 240 includes: stylus tip data and measurement data representing the results of a measurement procedure during which a stylus tip follows surface variations as the stylus traverses a measurement path along a surface of a workpiece where that measurement data may be represented as values of z at measurement points x to give a measurement data set $(x, z)$. The data may also include traverse data including the traverse angle β and the measurement step $X_i$ in the traverse direction; a nominal form of the surface of the workpiece to be measured, that is the form that the surface was designed or intended to have, and the height $\Delta z_{flat}$ which as set out above is the distance in the z direction from z=0 to the top surface of the flat part 100 and stylus characteristics including, for example, the length L of the stylus arm 11, a pivot offset angle $\alpha_0$, the length S of a stylus shank projecting from the stylus arm 11 and carrying at its free end the stylus tip 12 and the dimensions and geometry of the stylus tip. The data store 241 also provides storage for re-created surface data.

The functionality shown in Figure 18 includes: a stylus tip centre determiner 242 that determines the coordinates $(x_s, z_s)$ of a centre of the stylus tip along a measurement path; a gradient determiner 243 that determines gradient data for the stylus tip centre locus; a surface re-creator 244 that re-creates the surface form of the measured surface using the stylus tip centre locus and gradient data; and a data output provider 245 for outputting the re-created surface form to a resource such as a display, printer, network connection or another computer.

Processes will now to be described with reference to Figures 19 for enabling account to be taken of characteristics of a stylus tip of a stylus of the metrological instrument. These processes may be carried out using the functionality described with reference to Figure 19 or any other appropriate functionality.

In order to explain the processes shown in Figures 19, reference is made to Figures 5 to 8 which illustrate aspects of the geometry of the metrological instrument described above.

As illustrated by Figure 20, the locus 200 of the path of the centre of the stylus tip is not coincident with the actual surface form 201.

At S201 in Figure 19, the centre $x_s$, $z_s$ of the stylus tip is determined. A given surface $z = z(x)$ that is traversed by a stylus tip of radius r generates a stylus-tip-centre locus:

$$z_s = z + r \cos \Psi$$
$$x_s = x - r \sin \Psi$$

$$23)$$

where (x, z) is the point of contact and r is the stylus tip radius, assuming the stylus tip or at least the part that contacts the surface is of spherical form, and
where

$$\tan \Psi = \frac{dz}{dx}$$

$$24)$$

At S202 the gradient of the stylus-tip centre locus is determined. Thus, taking differentials

$$\frac{dz_s}{dx} = \frac{dz}{dx} - r \sin \Psi \frac{d\Psi}{dx}$$

$$\frac{dx_s}{dx} = 1 - r \cos \Psi \frac{d\Psi}{dx}$$

$$25)$$

From equation 24):

$$\frac{d\Psi}{dx} = \cos^2 \Psi \frac{d^2 z}{dx^2}$$

$$26)$$

Giving:

$$\frac{dz_s}{dx_s} = \frac{\tan \Psi - r \sin \Psi \cos^2 \Psi \frac{d^2 z}{dx^2}}{1 - r \cos \Psi \cos^2 \Psi \frac{d^2 z}{dx^2}} = \frac{\sin \Psi - r \sin \Psi \cos^3 \Psi \frac{d^2 z}{dx^2}}{\cos \Psi - r \cos \Psi \cos^3 \Psi \frac{d^2 z}{dx^2}}$$

$$27)$$

$$\Rightarrow \frac{dz_s}{dx_s} = \tan \Psi$$

At S203 from the knowledge of the stylus-tip-centre locus, $(x_s, z_s)$, its derivative may be established and the surface function (that is the surface form that was measured) directly re-created in accordance with:

$$z = z_s - r \cos \Psi$$
$$x = x_s + r \sin \Psi$$

$$28)$$

because

$$\frac{dz_s}{dx_s} = \frac{dz}{dx}$$

$$29)$$

The above described technique may be extended to three-dimensional surfaces, that is surfaces having form in both the x and y directions.
In an embodiment, the form of the surface being measured may be determined using the determined stylus tip

locus $x_s\,y_s\,z_s$:

$$z = z_s - r\cos\Psi$$

$$x = x_s + r\sin\Psi\cos\theta$$

$$y = y_s + r\sin\Psi\sin\theta$$

where

$$\tan\theta = \frac{\partial z_s}{\partial y_s}\Big/\frac{\partial z_s}{\partial x_s}$$

and where

$$\tan\Psi = \frac{\partial z_s}{\partial x_s}\Big/\cos\theta$$

Application of these relationships allows the surface form to be re-created from the stylus tip centre locus.

The form of the surface being measured may be determined using the determined stylus tip locus and the gradient of the stylus tip locus.

It will of course be appreciated that where, as an example described above, the stylus is a pivotally mounted stylus, appropriate correction will be made for the fact that the stylus tip follows an arcuate path as it is deflected as it follows surface variations in the surface being measured.

Accordingly, in a surface form measuring instrument, such as the one discussed above, the surface form can be obtained from the stylus-tip centre loci together with a knowledge of the stylus tip radius as exemplified by the data shown in Figures 20 and 21 in which Figure 20 shows a representation of the locus 200 of the path of the centre of the stylus tip and the actual surface form 201 and Figure 21 shows a representation the surface form 202 derived from the stylus tip locus 200.

## Modifications and Variations

A person skilled in the art will understand that the techniques described that may be applied to any surface form measuring instrument, including roundness measuring instruments. The techniques described may also be applicable to an axially movable as well as a pivotally movable stylus. The person skilled in the art will also understand that the above described techniques may be used for simulating a measurement of a nominal form as well as for determining a measurement of the form of an actual workpiece.

A person skilled in the art will appreciate that a number of different methods of centring and levelling could be employed with the above-described techniques. For example, as one possibility, mechanical centring is used. It may be possible to use software centring and/or levelling, for example as described in US-A-5926781, the whole contents of which are hereby incorporated by reference, which may enable omission of at least some of the centring and levelling mechanisms discussed herein. Other forms of centring and levelling mechanism may be used. For example, it may be possible to use wedge assemblies of the type described in the Applicant's International Application Publication No. WO 2007/091087. Other levelling mechanism that do not use wedge assemblies may be used, for example, as discussed in US-A-4731934.

It will be appreciated that the traverse angle $\beta$ could be zero. Also, the stylus need not necessarily be a contact stylus but could be any form of stylus that follows the frame of a surface, although this may require modification of the definition of the stylus tip centre.

In the above example, the stylus tip is in the form of a sphere of given radius r but it could have another form, for example a frusto-conical form with a part-spherical contact surface.

Also, other gauge transducers units than the ones described above may be used, for example it may be possible to use an LVDT gauge or a different form of optical interferometric gauge.

A person skilled in the art will appreciate that the methods and apparatus described herein need not be limited in their application to instruments for the measurement of aspheric, concave or convex surfaces, and may equally be applied to instruments for the measurement of other surfaces.

As one possibility, there is provided a computer program, computer program product, or computer readable medium, comprising computer program instructions to cause a programmable computer to carry out any one or more of the methods described herein. Various features described above may have advantages with or without other features described above.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

**Claims**

1. A data processor (13) for a metrological apparatus (1) for measuring a surface characteristic of a workpiece (4), the metrological apparatus comprising: a mover (9) to carry out a measurement procedure by effecting relative movement in a measurement direction between a workpiece and a stylus (11,12) such that the stylus is deflected as a stylus tip (12) of the stylus follows surface variations along a measurement path on a surface of the workpiece; and a transducer (39) to provide a measurement data set in a measurement coordinate system representing the deflection of the stylus at measurement points along the measurement path, the transducer having a measurement range, and the data processor being configured to:

   receive nominal surface data representing the expected surface characteristic of the workpiece in a workpiece coordinate system;
   determine a relationship between the measurement data in the measurement coordinate system and the nominal surface data in the workpiece coordinate system;
   simulate a measurement data set for the nominal surface using the nominal surface data and the determined relationship, the simulation providing a simulated measurement data set having a simulated range of simulated measurement values;
   determine whether the simulated range meets a given criterion;
   if the simulated range does not meet the given criterion, adjust a selected measurement data value for a selected measurement point and repeat the simulation to determine an adjusted measurement data value for which the simulated range meets the given criterion; and
   determine measurement start conditions required for a measurement procedure to provide the adjusted measurement data value for the selected measurement point.

2. A data processor according to Claim 1, wherein the measurement direction of the metrological apparatus is at an angle $\beta$ to an axis, x, of the workpiece coordinate system, for example wherein the surface characteristic is a surface form of a surface of the workpiece.

3. A data processor according to Claim 1, wherein the relationship is given by:

$$L\cos(\beta + \alpha_o) + X\cos\beta - L\cos\alpha = x_s$$

$$L\sin(\beta + \alpha_o) + X\sin\beta + \Delta Z_{col} - L\sin\alpha = z_s$$

   wherein the metrological instrument comprises a pivotal mounting provided for the stylus such that an arm of the stylus pivots about a pivot axis through an angle $\alpha$ as the stylus tip follows surface variations, so that $\alpha$ is the degree of deflection of the stylus arm and $\alpha = \alpha_o + \beta - (G / L)$

   where G is the measurement data or transducer output;
   X is the traverse or measurement direction which extends at the angle $\beta$ to the x axis;
   $\Delta Z_{col}$ is the distance in the z direction when the stylus tip is at a measurement point on the surface being measured from the corresponding z position at which G=0;

where x is a direction along a workpiece support surface of the apparatus, and z is a direction normal to the workpiece support surface, and the stylus tip locus is denoted by $x_s, y_s, z_s$ $\alpha_0$ is a pivot offset angle;
L is the distance between the centre of the stylus tip and the pivot axis which on inversion:

$$Z_c - Z_{flat} = \Delta Z_{col} = \frac{L(\sin(\alpha - \beta) - \sin\alpha_o) - x_s \sin\beta + z_s \cos\beta}{\cos\beta}$$

$$X = \frac{L(\cos\alpha - \cos(\beta + \alpha_o)) + x_s}{\cos\beta}$$

wherein $z_{flat}$ is the distance in the z direction from z=0 to the top surface of a flat part of the work piece.

4.  The data processor of any preceding claim wherein the data processor is configured to determine the relationship between the measurement data in the measurement coordinate system and the nominal surface data in the workpiece coordinate system and to simulate the measurement data set by simulating the nominal surface form and rotating the simulated nominal surface form to the measurement direction.

5.  The data processor of any preceding claim wherein the data processor is configured to use a gauge calibration relationship relating a measurement data value and a measurement direction position to a distance $z_G$ in the z direction to determine a data set in G and X and if the measurement range of the data set in G does not meet the given criterion, to adjust the selected measurement data value for the selected measurement point until the range meets the given criterion, and the z direction is a direction normal to a workpiece support surface.

6.  A data processor according to any preceding claim, wherein the data processor is configured to use as the adjusted measurement data value a measurement data value G'$_0$ which is one of:

    (a) based on the selected measurement data value and a difference between maximum and minimum simulated measurement values;
    (b) based on a difference between the selected measurement data value and an average or mean of maximum and minimum simulated measurement values; and
    (c) calculated according to G'$_0$ = G$_0$ -(G$_{max}$-G$_{min}$)/2 where G$_0$ is the selected measurement data value, and G$_{max}$ and G$_{min}$ are the maximum and minimum simulated measurement data values respectively.

7.  A metrological apparatus for measuring a surface characteristic of a workpiece, the apparatus comprising: the data processor of any preceding claim, the mover, and the transducer.

8.  The metrological apparatus according to claim 6, comprising a pivotal mounting for the stylus such that an arm of the stylus pivots about a pivot axis through an angle $\alpha$ as the stylus as the stylus tip follows surface variations.

9.  The metrological apparatus of claim 8 wherein the surface characteristic is a surface form of a surface of the workpiece.

10. A metrological apparatus according to claim 8 or 9, comprising a traverse unit to move the stylus in the measurement direction.

11. A method for facilitating measurement of a surface characteristic of a workpiece (14) using an apparatus (1) comprising:

    a mover (9) to carry out a measurement procedure by effecting relative movement in a measurement direction between a workpiece and a stylus (11,12) such that the stylus is deflected as a stylus tip of the stylus follows surface variations along a measurement path on a surface of the workpiece; and
    a transducer (39) to provide a measurement data set in a measurement coordinate system representing the deflection of the stylus at measurement points along the measurement path, the transducer having a measurement range, the method comprising:

    determining a relationship between the measurement data in the measurement coordinate system and nominal surface data representing the expected surface characteristic of the workpiece in a workpiece coordinate system;

simulating a measurement data set for the nominal surface using the nominal surface data and the determined relationship, the simulation providing a simulated measurement data set having a simulated range of simulated measurement values;

determining whether the simulated range meets a given criterion;

if the simulated range does not meet the given criterion, adjusting a selected measurement data value for a selected measurement point and repeating the simulation to determine an adjusted measurement data value for which the simulated range meets the given criterion; and

determining measurement start conditions required for a measurement procedure to provide the adjusted measurement data value for the selected measurement point.

12. A method according to claim 11, wherein the relationship is given by:

$$L\cos(\beta + \alpha_o) + X\cos\beta - L\cos\alpha = x_s$$

$$L\sin(\beta + \alpha_o) + X\sin\beta + \Delta Z_{col} - L\sin\alpha = z_s$$

where

$\alpha$ is the degree of deflection of the stylus arm and $\alpha = \alpha_o + \beta - (G/L)$ where G is the measurement data or transducer output;

X is the traverse or measurement direction which extends at the angle $\beta$ to the x axis;

$\Delta Z_{col}$ is the distance in the z direction when the stylus tip is at a measurement point on the surface being measured from the corresponding z position at which G=0;

$\alpha_0$ is a pivot offset angle;

L is the distance between the centre of the stylus tip and the pivot axis which on inversion:

$$Z_c - Z_{flat} = \Delta Z_{col} = \frac{L(\sin(\alpha - \beta) - \sin\alpha_o) - x_s\sin\beta + z_s\cos\beta}{\cos\beta}$$

$$X = \frac{L(\cos\alpha - \cos(\beta + \alpha_o)) + x_s}{\cos\beta}$$

13. A method according to claim 11, comprising determining the relationship between the measurement data in the measurement coordinate system and the nominal surface data in the workpiece coordinate system and simulating the measurement data set by simulating the nominal surface form and rotating the simulated nominal surface form to the measurement direction, and for example further comprising using a gauge calibration relationship relating a measurement data value and a measurement direction position to a distance $z_G$ in z to determine a data set in G and X and if the measurement range G does not meet the given criterion, adjusting the selected measurement data value for the selected measurement point until the range meets the given criterion.

14. A method according to claim 11, comprising determining the relationship between the measurement data in the measurement coordinate system and the nominal surface data in the workpiece coordinate system and simulating the measurement data set by:

simulating the nominal surface form and rotating the simulated nominal surface form by -$\beta$ so that, referring to the nominal profile as z(x) + $z_{flat}$ :

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix}$$

determining gauge calibration relationships

$$z_G = \alpha_1 G + \alpha_2 G^2 + \alpha_3 G^3$$

$$x_G = X + \beta_1 z_G + \beta_2 z_G^2 + \beta_3 z_G^3$$

deriving from the gauge relationships:

$$G = \gamma_1 z_G + \gamma_2 z_G^2 + \gamma_3 z_G^3$$

$$X = x_G - \left(\beta_1 z_G + \beta_2 z_G^2 + \beta_3 z_G^3\right)$$

setting G to a selected measurement data value, such as zero,
determining a starting value for $Z_c$ - $Z_{flat}$ to be determined at S14 in accordance with:

$$Z_c - Z_{flat} = \Delta Z_{col} = \frac{L\left(\sin(\alpha - \beta) - \sin\alpha_o\right) - x_s \sin\beta + z_s \cos\beta}{\cos\beta}$$

$$X = \frac{L\left(\cos\alpha - \cos(\beta + \alpha_o)\right) + x_s}{\cos\beta}$$

then determining a (G, X) data set in accordance with:

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix}$$

$$G = \gamma_1 z_G + \gamma_2 z_G^2 + \gamma_3 z_G^3$$

$$X = x_G - \left(\beta_1 z_G + \beta_2 z_G^2 + \beta_3 z_G^3\right)$$

**15.** A computer program product comprising program instructions to program a processor, preferably a processor according to any of claims 1 to 7, to carry out data processing of a method according to any of claims 11 to 14.

**Patentansprüche**

**1.** Datenprozessor (13) für eine messtechnische Vorrichtung (1) zum Messen einer Oberflächeneigenschaft eines Werkstücks (4),
wobei die messtechnische Vorrichtung Folgendes umfasst: eine Bewegungseinrichtung (9) zum Ausführen eines Messverfahrens durch Bewirken einer Relativbewegung in einer Messrichtung zwischen einem Werkstück und einem Stift (11, 12), so dass der Stift abgelenkt wird, während eine Stiftspitze (12) des Stifts Oberflächenschwankungen entlang eines Messpfades auf einer Oberfläche des Werkstücks folgt; und einen Wandler (39) zum Bereitstellen eines Messdatensatzes in einem Messkoordinatensystem, der die Auslenkung des Stifts an Messpunkten entlang des Messpfades darstellt, wobei der Wandler einen Messbereich aufweist,
und wobei der Datenprozessor für Folgendes konfiguriert ist:

Empfangen nomineller Oberflächendaten, die die erwartete Oberflächeneigenschaft des Werkstücks in einem Werkstückkoordinatensystem darstellen;

Bestimmen einer Beziehung zwischen den Messdaten im Messkoordinatensystem und den nominalen Oberflächendaten im Werkstückkoordinatensystem;

Simulieren eines Messdatensatzes für die Nennfläche anhand der Nennflächendaten und der ermittelten Beziehung, wobei die Simulation einen simulierten Messdatensatz mit einem simulierten Bereich von simulierten Messwerten bereitstellt;

Bestimmen, ob der simulierte Bereich ein gegebenes Kriterium erfüllt;

wenn der simulierte Bereich das angegebene Kriterium nicht erfüllt, Anpassen eines ausgewählten Messdatenwerts für einen ausgewählten Messpunkt und Wiederholen der Simulation, um einen angepassten Messdatenwert zu ermitteln, für den der simulierte Bereich das angegebene Kriterium erfüllt; und

Bestimmen der Messstartbedingungen, die für ein Messverfahren erforderlich sind, um den angepassten Messdatenwert für den ausgewählten Messpunkt bereitzustellen.

2. Datenprozessor nach Anspruch 1, **dadurch gekennzeichnet, dass** die Messrichtung der Messvorrichtung in einem Winkel $\beta$ zu einer Achse x des Werkstückkoordinatensystems liegt, zum Beispiel wobei die Oberflächeneigenschaft eine Oberflächenform einer Oberfläche des Werkstücks ist.

3. Datenprozessor nach Anspruch 1, wobei die Beziehung gegeben ist durch:

$$L\cos(\beta + \alpha_o) + X\cos\beta - L\cos\alpha = x_s$$

$$L\sin(\beta + \alpha_o) + X\sin\beta + \Delta Z_{col} - L\sin\alpha = z_s$$

wobei das messtechnische Instrument eine schwenkbare Halterung umfasst, die für den Stift vorgesehen ist, so dass ein Arm des Stifts um eine Schwenkachse um einen Winkel $\alpha$ schwenkt, wenn die Stiftspitze Oberflächenschwankungen folgt, so dass $\alpha$ der Grad der Auslenkung des Stiftarms ist und $\alpha = \alpha_o + \beta - (G/L)$

wobei G die Messdaten oder die Wandlerausgabe sind;

X die Quer- oder Messrichtung ist, die sich unter dem Winkel $\beta$ zur x-Achse erstreckt;

$\Delta Z_{col}$ der Abstand in z-Richtung ist, wenn sich die Stiftspitze an einem Messpunkt auf der zu messenden Oberfläche von der entsprechenden z-Position aus, an der G = 0 ist, befindet;

wobei x eine Richtung entlang einer Werkstückauflagefläche der Vorrichtung ist und z eine Richtung senkrecht zu der Werkstückauflagefläche ist und der Stiftspitzenort mit $x_s, y_s, z_s$ bezeichnet ist,

$\alpha_0$ ein Schwenkversatzwinkel ist;

L der Abstand zwischen der Mitte der Stiftspitze und der Schwenkachse ist, die bei Inversion Folgendes ist:

$$Z_c - Z_{flat} = \Delta Z_{col} = \frac{L(\sin(\alpha - \beta) - \sin\alpha_o) - x_s\sin\beta + z_s\cos\beta}{\cos\beta}$$

$$X = \frac{L(\cos\alpha - \cos(\beta + \alpha_o)) + x_s}{\cos\beta}$$

wobei $Z_{flat}$ der Abstand in z-Richtung von z = 0 zur Oberseite eines flachen Teils des Werkstücks ist.

4. Datenprozessor nach einem der vorhergehenden Ansprüche, wobei der Datenprozessor für Folgendes konfiguriert ist: Bestimmen der Beziehung zwischen den Messdaten im Messkoordinatensystem und den nominalen Oberflächendaten im Werkstückkoordinatensystem und Simulieren des Messdatensatzes durch Simulieren der Nennflächenform und Drehen der simulierten Nennflächenform in Messrichtung.

5. Datenprozessor nach einem der vorhergehenden Ansprüche, wobei der Datenprozessor für Folgendes konfiguriert ist: Verwenden einer Messvorrichtungskalibrierungsbeziehung, die einen Messdatenwert und eine Messrichtungsposition mit einem Abstand $z_G$ in z-Richtung in Beziehung setzt, um einen Datensatz in G und X zu bestimmen, und wenn der Messbereich des Datensatzes in G das angegebene Kriterium nicht erfüllt, Anpassen des ausgewählten Messdatenwerts für den ausgewählten Messpunkt, bis der Bereich das angegebene Kriterium erfüllt und die z-Richtung eine zur Werkstückauflagefläche senkrechte Richtung ist.

6. Datenprozessor nach einem der vorhergehenden Ansprüche, wobei der Datenprozessor dafür konfiguriert ist, als den eingestellten Messdatenwert einen Messdatenwert $G'_0$ zu verwenden, der:

(a) auf dem ausgewählten Messdatenwert und einer Differenz zwischen maximalen und minimalen simulierten Messwerten basiert;
(b) auf einer Differenz zwischen dem ausgewählten Messdatenwert und einem Durchschnitt oder Mittelwert von maximalen und minimalen simulierten Messwerten basiert; oder
(c) gemäß $G'_0 = G_0 - (G_{max}-G_{min})/2$ berechnet wird, wobei $G_0$ der ausgewählte Messdatenwert ist und $G_{max}$ und $G_{min}$ die maximalen bzw. minimalen simulierten Messdatenwerte sind.

7. Messtechnische Vorrichtung zum Messen einer Oberflächeneigenschaft eines Werkstücks, wobei die Vorrichtung Folgendes umfasst: den Datenprozessor nach einem der vorhergehenden Ansprüche, die Bewegungseinrichtung und den Wandler.

8. Messtechnische Vorrichtung nach Anspruch 6, die eine schwenkbare Halterung für den Stift umfasst, so dass ein Arm des Stiftes um eine Schwenkachse um einen Winkel $\alpha$ schwenkt, wenn der Stift wenn die Stiftspitze Oberflächenvariationen folgt.

9. Messtechnische Vorrichtung nach Anspruch 8, wobei die Oberflächeneigenschaft eine Oberflächenform einer Oberfläche des Werkstücks ist.

10. Messtechnische Vorrichtung nach Anspruch 8 oder 9, die eine Traversiereinheit zum Bewegen des Stifts in Messrichtung umfasst.

11. Verfahren zur Erleichterung der Messung einer Oberflächeneigenschaft eines Werkstücks (14) unter Verwendung einer Vorrichtung (1), die Folgendes umfasst:

eine Bewegungseinrichtung (9) zum Ausführen eines Messverfahrens durch Bewirken einer Relativbewegung in einer Messrichtung zwischen einem Werkstück und einem Stift (11, 12), so dass der Stift abgelenkt wird, während eine Stiftspitze des Stifts Oberflächenschwankungen entlang eines Messpfades auf einer Oberfläche des Werkstücks folgt; und
einen Wandler (39) zum Bereitstellen eines Messdatensatzes in einem Messkoordinatensystem, der die Auslenkung des Stifts an Messpunkten entlang des Messpfades darstellt, wobei der Wandler einen Messbereich aufweist,

wobei das Verfahren Folgendes umfasst:

Bestimmen einer Beziehung zwischen den Messdaten in dem Messkoordinatensystem und nominalen Oberflächendaten, die die erwartete Oberflächeneigenschaft des Werkstücks in einem Werkstückkoordinatensystem darstellen;
Simulieren eines Messdatensatzes für die Nennfläche anhand der Nennflächendaten und der ermittelten Beziehung, wobei die Simulation einen simulierten Messdatensatz mit einem simulierten Bereich von simulierten Messwerten bereitstellt;
Bestimmen, ob der simulierte Bereich ein gegebenes Kriterium erfüllt;
wenn der simulierte Bereich das angegebene Kriterium nicht erfüllt, Anpassen eines ausgewählten Messdatenwerts für einen ausgewählten Messpunkt und Wiederholen der Simulation, um einen angepassten Messdatenwert zu ermitteln, für den der simulierte Bereich das angegebene Kriterium erfüllt; und
Bestimmen der Messstartbedingungen, die für ein Messverfahren erforderlich sind, um den angepassten Messdatenwert für den ausgewählten Messpunkt bereitzustellen.

12. Verfahren nach Anspruch 11, wobei die Beziehung gegeben ist durch:

$$L\cos(\beta+\alpha_o)+X\cos\beta-L\cos\alpha = x_s$$

$$L\sin(\beta+\alpha_o)+X\sin\beta+\Delta Z_{col}-L\sin\alpha=z_s$$

wobei

$\alpha$ der Grad der Auslenkung des Stiftarms ist und $\alpha=\alpha_o+\beta\text{-}(G/L)$ wobei G die Messdaten oder die Wandlerausgabe sind;

X die Quer- oder Messrichtung ist, die sich unter dem Winkel $\beta$ zur x-Achse erstreckt;

$\Delta Z_{col}$ der Abstand in z-Richtung ist, wenn sich die Stiftspitze an einem Messpunkt auf der zu messenden Oberfläche von der entsprechenden z-Position aus, an der G = 0 ist, befindet;

$\alpha_0$ ein Schwenkversatzwinkel ist;

L der Abstand zwischen der Mitte der Stiftspitze und der Schwenkachse ist, die bei Inversion Folgendes ist:

$$Z_c-Z_{flat}=\Delta Z_{col}=\frac{L(\sin(\alpha-\beta)-\sin\alpha_o)-x_s\sin\beta+z_s\cos\beta}{\cos\beta}$$

$$X=\frac{L(\cos\alpha-\cos(\beta+\alpha_o))+x_s}{\cos\beta}$$

**13.** Verfahren nach Anspruch 11, das Folgendes umfasst: Bestimmen der Beziehung zwischen den Messdaten im Messkoordinatensystem und den Nennflächendaten im Werkstückkoordinatensystem und Simulieren des Messdatensatzes durch Simulieren der Nennflächenform und Drehen der simulierten Nennflächenform zur Messrichtung, und das zum Beispiel ferner das Verwenden einer Eichungsbeziehung umfasst, die einen Messdatenwert und eine Messrichtungsposition mit einem Abstand $z_G$ in z in Beziehung setzt, um einen Datensatz in G und X zu bestimmen, und wenn der Messbereich G das angegebene Kriterium nicht erfüllt, Anpassen des ausgewählten Messdatenwerts für den ausgewählten Messpunkt, bis der Bereich das gegebene Kriterium erfüllt.

**14.** Verfahren nach Anspruch 11, das das Bestimmen der Beziehung zwischen den Messdaten im Messkoordinatensystem und den nominalen Oberflächendaten im Werkstückkoordinatensystem und das Simulieren des Messdatensatzes durch Folgendes umfasst:

Simulieren der Nennflächenform und Drehen der simulierten Nennflächenform um $-\beta$, so dass mit Bezug auf das Nennprofil als z(x) + $z_{flat}$:

$$\begin{pmatrix} x_G \\ z_G \end{pmatrix}=\begin{pmatrix} \cos(-\beta) & -\sin(-\beta) \\ \sin(-\beta) & \cos(-\beta) \end{pmatrix}\begin{pmatrix} x_s \\ z_s(x_s)-(Z_c-Z_{flat}) \end{pmatrix}$$

Bestimmen der Eichverhältnisse

$$z_G=\alpha_1 G+\alpha_2 G^2+\alpha_3 G^3$$

$$x_G=X+\beta_1 z_G+\beta_2 z_G^2+\beta_3 z_G^3$$

Ableiten von den Eichverhältnissen:

$$G=\gamma_1 z_G+\gamma_2 z_G^2+\gamma_3 z_G^3$$

$$X=x_G-\left(\beta_1 z_G+\beta_2 z_G^2+\beta_3 z_G^3\right)$$

Setzen von G auf einen ausgewählten Messdatenwert, z. B. Null,

Bestimmen eines in S14 zu bestimmenden Startwerts für $Z_c$ - $Z_{flat}$ gemäß:

$$Z_c - Z_{flat} = \Delta Z_{col} = \frac{L(\sin(\alpha - \beta) - \sin \alpha_o) - x_s \sin \beta + z_s \cos \beta}{\cos \beta}$$

$$X = \frac{L(\cos \alpha - \cos(\beta + \alpha_o)) + x_s}{\cos \beta}$$

dann Bestimmen eines (G, X) -Datensatzes gemäß:

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix}$$

$$G = \gamma_1 z_G + \gamma_2 z_G^2 + \gamma_3 z_G^3$$

$$X = x_G - (\beta_1 z_G + \beta_2 z_G^2 + \beta_3 z_G^3)$$

**15.** Computerprogrammprodukt mit Programmanweisungen zum Programmieren eines Prozessors, vorzugsweise eines Prozessors nach einem der Ansprüche 1 bis 7, zum Ausführen einer Datenverarbeitung eines Verfahrens nach einem der Ansprüche 11 bis 14.

**Revendications**

**1.** Processeur de données (13) pour appareil métrologique (1) destiné à mesurer une caractéristique de surface d'une pièce à usiner (4),
l'appareil métrologique comprenant : un organe de déplacement (9) pour réaliser une procédure de mesure en effectuant un déplacement relatif dans un sens de mesure entre une pièce à usiner et un stylet (11, 12) de telle sorte que le stylet soit dévié au fur et à mesure qu'une pointe de stylet (12) du stylet suit des variations de surface le long d'un chemin de mesure sur une surface de la pièce à usiner ; et un transducteur (39) pour fournir un ensemble de données de mesure dans un système de coordonnées de mesure représentant la déviation du stylet à des points de mesure le long du chemin de mesure, le transducteur ayant une plage de mesure,
et le processeur de données étant configuré pour:

recevoir des données de surface nominale représentant la caractéristique de surface prévue de la pièce à usiner dans un système de coordonnées de pièce à usiner;
déterminer une relation entre les données de mesure dans le système de coordonnées de mesure et les données de surface nominale dans le système de coordonnées de pièce à usiner;
simuler un ensemble de données de mesure pour la surface nominale à l'aide des données de surface nominale et de la relation déterminée, la simulation fournissant un ensemble de données de mesure simulé ayant une plage simulée de valeurs de mesure simulées;
déterminer que la plage simulée satisfait ou non un critère donné;
si la plage simulée ne satisfait pas le critère donné, ajuster une valeur de données de mesure sélectionnée pour un point de mesure sélectionné et répéter la simulation pour déterminer une valeur de données de mesure ajustée pour laquelle la plage simulée satisfait le critère donné; et
déterminer des conditions de début de mesure requises pour une procédure de mesure afin de fournir la valeur de données de mesure ajustée pour le point de mesure sélectionné.

**2.** Processeur de données selon la revendication 1, dans lequel le sens de mesure de l'appareil métrologique est à un angle $\beta$ par rapport à un axe, x, du système de coordonnées de pièce à usiner, par exemple dans lequel la caractéristique de surface est une forme de surface d'une surface de la pièce à usiner.

3. Processeur de données selon la revendication 1, dans lequel la relation est donnée par :

$$L\cos(\beta + \alpha_o) + X\cos\beta - L\cos\alpha = x_s$$

$$L\sin(\beta + \alpha_o) + X\sin\beta + \Delta Z_{col} - L\sin\alpha = z_s$$

où l'instrument métrologique comprend une monture pivotante fournie pour le stylet de telle sorte qu'une branche du stylet pivote autour d'un axe pivot par un angle $\alpha$ au fur et à mesure que la pointe de stylet suit des variations de surface, a étant le degré de déviation de la branche du stylet et $\alpha = \alpha_o + \beta - (G/L)$

où G représentent les données de mesure ou sortie de transducteur;

X est le sens de déplacement ou de mesure qui s'étend à l'angle $\beta$ par rapport à l'axe x;

$\Delta Z_{col}$ est la distance dans le sens z quand la pointe de stylet se trouve au point de mesure sur la surface mesurée par rapport à la position z correspondante à laquelle G=0;

où x est un sens le long d'une surface de support de pièce à usiner de l'appareil, et z est un sens normal à la surface de support de pièce à usiner, et le lieu de la pointe de stylet est désigné par $x_s$, $y_s$, $z_s$ $\alpha_0$ est un angle de décalage de pivot;

Lest la distance entre le centre de la pointe de stylet et l'axe pivot qui en inversion :

$$Z_c - Z_{flat} = \Delta Z_{col} = \frac{L(\sin(\alpha - \beta) - \sin\alpha_o) - x_s\sin\beta + z_s\cos\beta}{\cos\beta}$$

$$X = \frac{L(\cos\alpha - \cos(\beta + \alpha_o)) + x_s}{\cos\beta}$$

dans lequel $z_{flat}$ est la distance dans le sens z de z = 0 jusqu'à la surface supérieure d'une partie plate de la pièce à usiner.

4. Processeur de données selon n'importe quelle revendication précédente, le processeur de données étant configuré pour déterminer la relation entre les données de mesure dans le système de coordonnées de mesure et les données de surface nominale dans le système de coordonnées de pièce à usiner et simuler l'ensemble de données de mesure en simulant la forme de surface nominale et faisant tourner la forme de surface nominale simulée par rapport au sens de mesure.

5. Processeur de données selon n'importe quelle revendication précédente, le processeur de données étant configuré pour utiliser une relation d'étalonnage de jauge associant une valeur de données de mesure et une position de sens de mesure à une distance $z_G$ dans le sens z pour déterminer un ensemble de données dans G et X et si la plage de mesure de l'ensemble de données dans G ne satisfait pas le critère donné, ajuster la valeur de donnée de mesure sélectionnée pour le point de mesure sélectionné jusqu'à ce que la plage satisfasse le critère donné, et le sens z soit un sens normal à une surface de support de pièce à usiner.

6. Processeur de données selon n'importe quelle revendication précédente, le processeur de données étant configuré pour utiliser comme valeur de donnée de mesure ajustée une valeur de données de mesure $G'_0$ qui est :

(a) basée sur la valeur de donnée de mesure sélectionnée et une différence entre des valeurs de mesure simulées maximale et minimale ; ou

(b) basée sur une différence entre la valeur de données de mesure sélectionnée et une moyenne de valeurs de mesure simulées maximale et minimale ; ou

(c) calculée conformément à $G'_0 = G_0 - (G_{max} - G_{min})/2$ où $G_0$ est la valeur de donnée de mesure sélectionnée, et $G_{max}$ et $G_{min}$ sont respectivement les valeurs de données de mesure simulées maximale et minimale.

7. Appareil métrologique pour mesurer une caractéristique de surface d'une pièce à usiner, l'appareil comprenant : le processeur de données selon n'importe quelle revendication précédente, l'organe de déplacement et le transducteur.

8. Appareil métrologique selon la revendication 6, comprenant une monture pivotante pour le stylet de telle sorte qu'une branche du stylet pivote autour d'un axe pivot sur un angle a au fur et à mesure que la pointe de stylet suit des variations de surface.

9. Appareil métrologique selon la revendication 8 dans lequel la caractéristique de surface est une forme de surface d'une surface de la pièce à usiner.

10. Appareil métrologique selon la revendication 8 ou 9, comprenant une unité de déplacement pour déplacer le stylet dans le sens de mesure.

11. Procédé permettant la mesure d'une caractéristique de surface d'une pièce à usiner (14) au moyen d'un appareil (1) comprenant:

   un organe de déplacement (9) pour réaliser une procédure de mesure en effectuant un déplacement relatif dans un sens de mesure entre une pièce à usiner et un stylet (11, 12) de telle sorte que le stylet soit dévié au fur et à mesure qu'une pointe de stylet du stylet suit des variations de surface le long d'un chemin de mesure sur une surface de la pièce à usiner; et
   un transducteur (39) pour fournir un ensemble de données de mesure dans un système de coordonnées de mesure représentant la déviation du stylet à des points de mesure le long du chemin de mesure, le transducteur ayant une plage de mesure,
   le procédé comprenant:

   la détermination d'une relation entre les données de mesure dans le système de coordonnées de mesure et des données de surface nominale représentant la caractéristique de surface prévue de la pièce à usiner dans un système de coordonnées de pièce à usiner;
   la simulation d'un ensemble de données de mesure pour la surface nominale à l'aide des données de surface nominale et de la relation déterminée, la simulation fournissant un ensemble de données de mesure simulées ayant une plage simulée de valeurs de mesure simulées;
   la détermination que la plage simulée satisfait ou non un critère donné;
   si la plage simulée ne satisfait pas le critère donné, l'ajustement dune valeur de données de mesure sélectionnée pour un point de mesure sélectionné et la répétition de la simulation pour déterminer une valeur de données de mesure ajustée pour laquelle la plage simulée satisfait le critère donné; et
   la détermination des conditions de début de mesure requises pour une procédure de mesure afin de fournir la valeur de données de mesure ajustée pour le point de mesure sélectionné.

12. Procédé selon la revendication 11, dans lequel la relation est donnée par :

$$L\cos(\beta + \alpha_o) + X\cos\beta - L\cos\alpha = x_s$$

$$L\sin(\beta + \alpha_o) + X\sin\beta + \Delta Z_{col} - L\sin\alpha = z_s$$

où

   a est le degré de déviation de la branche du stylet et $\alpha = \alpha_o + \beta - (G/L)$ où G représente les données de mesure ou sortie de transducteur;
   X est le sens de déplacment ou de mesure qui s'étend à l'angle $\beta$ par rapport à l'axe x;
   $\Delta Z_{col}$ est la distance dans le sens z quand la pointe de stylet se trouve à un point de mesure sur la surface mesurée par rapport à la position z correspondante à laquelle G=0;
   $\alpha_0$ est un angle de décalage de pivot;
   Lest la distance entre le centre de la pointe de stylet et l'axe pivot qui en inversion:

$$Z_c - Z_{flat} = \Delta Z_{col} = \frac{L(\sin(\alpha - \beta) - \sin\alpha_o) - x_s\sin\beta + z_s\cos\beta}{\cos\beta}$$

$$X = \frac{L(\cos\alpha - \cos(\beta + \alpha_o)) + x_s}{\cos\beta}$$

**13.** Procédé selon la revendication 11, comprenant la détermination de la relation entre les données de mesure dans le système de coordonnées de mesure et les données de surface nominales dans le système de coordonnées de pièce à usiner et la simulation de l'ensemble de données de mesure en simulant la forme de surface nominale et faisant tourner la forme de surface nominale simulée par rapport au sens de mesure, et par exemple comprenant en outre l'utilisation d'une relation d'étalonnage de jauge associant une valeur de donnée de mesure et une position de sens de mesure à une distance $z_G$ dans z pour déterminer un ensemble de données dans G et X et si la plage de mesure de l'ensemble de données dans G ne satisfait pas le critère donné, l'ajustement de la valeur de donnée de mesure sélectionnée pour le point de mesure sélectionné jusqu'à ce que la plage satisfasse le critère donné.

**14.** Procédé selon la revendication 11, comprenant la détermination de la relation entre les données de mesure dans le système de coordonnées de mesure et les données de surface nominales dans le système de coordonnées de pièce à usiner et la simulation de l'ensemble de données de mesure en:

simulant la forme de surface nominale et faisant tourner la forme de surface nominale simulée par $-\beta$ de telle sorte que, en référence au profil nominal $z(x) + z_{flat}$ :

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix}$$

la détermination de relations d'étalonnage de jauge

$$z_G = \alpha_1 G + \alpha_2 G^2 + \alpha_3 G^3$$
$$x_G = X + \beta_1 z_G + \beta_2 z_G^2 + \beta_3 z_G^3$$

la dérivée à partir des relations de jauge de :

$$G = \gamma_1 z_G + \gamma_2 z_G^2 + \gamma_3 z_G^3$$

$$X = x_G - \left(\beta_1 z_G + \beta_2 z_G^2 + \beta_3 z_G^3\right)$$

le réglage de G à une valeur de données de mesure sélectionnée, telle que zéro,
la détermination d'une valeur de début pour $Z_c - Z_{flat}$ à déterminer à S14 conformément à :

$$Z_c - Z_{flat} = \Delta Z_{col} = \frac{L(\sin(\alpha - \beta) - \sin\alpha_o) - x_s \sin\beta + z_s \cos\beta}{\cos\beta}$$

$$X = \frac{L(\cos\alpha - \cos(\beta + \alpha_o)) + x_s}{\cos\beta}$$

puis la détermination d'un ensemble de données (G, X) conformément à:

$$\begin{pmatrix} x_G \\ z_G \end{pmatrix} = \begin{pmatrix} \cos(-\beta) & -\sin(-\beta) \\ \sin(-\beta) & \cos(-\beta) \end{pmatrix} \begin{pmatrix} x_s \\ z_s(x_s) - (Z_c - Z_{flat}) \end{pmatrix}$$

$$G = \gamma_1 z_G + \gamma_2 z_G^2 + \gamma_3 z_G^3$$

$$X = x_G - \left( \beta_1 z_G + \beta_2 z_G^2 + \beta_3 z_G^3 \right)$$

**15.** Produit-programme informatique comprenant des instructions de programme pour programmer un processeur, de préférence un processeur selon l'une quelconque des revendications 1 à 7, pour réaliser un traitement de données d'un procédé selon l'une quelconque des revendications 11 à 14.

*Fig. 1*

*Fig. 2*

*Fig. 3*

Determine relationship between stylus tip
location in component coordinate system
$(x_s, z_s)$ and in measurement coordinate
system (G, X) — S1

Select initial gauge reading G
for measurement start position — S2

Simulate surface data
set using nominal form — S3

Determine maximum $G_{max}$ and minimum $G_{min}$ gauge
readings for simulated surface data set given G — S4

S6

Set $G'_0 = G_0 - (G_{max} - G_{min}) / 2$

No ← $G_{max} - G_{min}$ less than threshold? — S5

Yes

Identify Z and X start positions
required to obtain current G at
measurement start location and
store as measurement start data — S7

*Fig. 4*

*Fig. 5*

*Fig. 6*

*Fig. 7*

*Fig. 8*

*Fig. 9*

Start

Simulate surface data set using nominal form — S10

Rotate through - traverse angle — S11

Determine G, X in terms of gauge calibration — S12

Select initial gauge reading G
for measurement start position — S13

Determine $Z_c$-$Z_{flat}$ — S14

Determine (G, X) data set — S15

S16: $G_{max}$ - $G_{min}$ less than threshold?

S17: Set $G_0'$ =$G_0$ - ($G_{max}$- $G_{min}$) / 2  (Yes)

No → Identify Z and X start positions required to obtain current G at measurement start location and store as measurement start data — S18

*Fig. 10*

140

Traverse data

Nominal form data

141

Data receiver

Stylus characteristics data

Simulation results

Stylus geometry determiner — 142

143

Stylus motion determiner

146

Contact angle determiner — 144

Simulated measurement output provider

Collision determiner — 145

*Fig. 11*

```
              ┌──────────┐
              │          │
              └────┬─────┘
                   │
                   ▼
   ┌─────────────────────────────────┐
   │ Define stylus representation     │        S101
   │ using stylus                     │ ─────
   │ characteristics and traverse data│
   └────────────────┬────────────────┘
                    │
                    ▼
   ┌─────────────────────────────────────┐
   │ Simulate relative movement of stylus │       S102
   │ representation and nominal form along│ ─────
   │ a measurement path on the surface    │
   │ of the nominal form to provide a     │
   │ simulated measurement                │
   └──────────────────┬──────────────────┘
                      │
                      ▼
   ┌─────────────────────────────────┐
   │ Determine position of stylus     │       S103
   │ representation at                │ ─────
   │ measurement points along         │
   │ measurement path                 │
   └────────────────┬────────────────┘
                    │
                    ▼
   ┌─────────────────────────────────┐
   │ Determine stylus contact angle   │       S104
   │ at measurement points            │ ─────
   └────────────────┬────────────────┘
                    │
                    ▼
   ┌─────────────────────────────────┐
   │ Identify any measurement points  │       S105
   │ at which contact angle is outside│ ─────
   │ a desired contact angle range    │
   └────────────────┬────────────────┘
                    │
                    ▼
   ┌─────────────────────────────────────┐
   │ Identify as potential collision      │       S106
   │ points any measurement points where  │ ─────
   │ the representation of the stylus arm │
   │ contacts or intersects measurement   │
   │ path or nominal form                 │
   └──────────────────┬──────────────────┘
                      │
                      ▼
   ┌─────────────────────────────────────┐
   │ Output data representing the         │       S107
   │ simulated measurement identifying    │ ─────
   │ any measurement points at which the  │
   │ contact angle is outside the desired │
   │ range and/or potential collision     │
   │ points                               │
   └──────────────────┬──────────────────┘
                      │
                      ▼
              ┌──────────┐
              │          │
              └──────────┘
```

*Fig. 12*

*Fig. 12a*

Simulation Example:

Fig. 13

Expanded view:

Fig. 14

Further expanded view:

*Fig. 15*

Same part but with Stylus Shank rotated forward by 25 deg

*Fig. 16*

Further expanded view:

*Fig. 17*

*Fig. 18*

Determin stylus tip centre $(x_s, z_s)$ — S201

Determine gradient of stylus tip locus — S202

Re-create surface function — S203

*Fig. 19*

Measurement profile

*Fig. 20*

Surface form (star), stylus centre (dots), form from stylus centre (squares)

*Fig. 21*

**EP 2 820 377 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2189604 A
- US 5517307 A
- WO 2010943906 A
- WO 2100043906 A
- WO 2010043906 A
- US 5926781 A
- WO 2007091087 A
- US 4731934 A